# EUROPÄISCHE PATENTSCHRIFT

(11) **EP 2 705 941 B1**
(45) Veröffentlichungstag und Bekanntmachung des Hinweises auf die Patenterteilung: **19.08.2015**
(21) Anmeldenummer: 13183396.4
(22) Anmeldetag: 06.09.2013
(51) Int. Cl.: B29C 49/04, B29C 47/00

(54) **Verfahren zur Herstellung blasgeformter Kunststoffhohlkörper und Mehrfachextrusionskopf zur Durchführung des Verfahrens**
Method for the production of blow moulded plastic hollow bodies and multiple extrusion head for carrying out the method
Procédé de fabrication de corps creux en matière plastique formés par soufflage et tête d'extrusion multiple permettant de réaliser le procédé

(30) Priorität: 07.09.2012 DE 102012108374
(43) Veröffentlichungstag der Anmeldung: 12.03.2014
(73) Patentinhaber: Feuerherm, Harald, 53840 Troisdorf (DE)
(72) Erfinder: Feuerherm, Harald, 53840 Troisdorf (DE); Kappen, Günther, 53840 Troisdorf (DE); Feuerherm, Max, 53840 Troisdorf (DE)
(74) Vertreter: Albrecht, Rainer Harald

(56) Entgegenhaltungen:
- EP-A1- 0 945 245
- EP-A1- 1 004 423
- EP-A2- 1 023 984
- US-A- 3 186 032

## Beschreibung

Die Erfindung betrifft ein Verfahren zur Herstellung blasgeformter Kunststoffhohlkörper, bei dem schlauchförmige Vorformlinge aus mehreren nebeneinander angeordneten Extrusionswerkzeugen eines Mehrfachextrusionskopfes synchron extrudiert und Blasformkavitäten einer Schließeinheit zugeführt werden, in der die Vorformlinge nach dem Schließen der Blasformkavitäten mittels Blasluft zu Kunststoffhohlkörpern aufgeweitet werden. Die Vorformlinge können auch einen coextrudierten mehrschichtigen Aufbau aufweisen. Die Erfindung betrifft ferner einen Mehrfachextrusionskopf zur Durchführung des Verfahrens.

Aus DE 10 2007 030 677 B4 ist ein Mehrfachextrusionskopf für eine Blasformanlage bekannt, die mehrere in einer Reihe nebeneinander angeordnete Extrusionswerkzeuge umfasst. Die Extrusionswerkzeuge erstrecken sich parallel zu einer Formtrennebene der Blasformkavitäten und weisen jeweils einen Dorn und einen den Dorn umgebenden Düsenkörper auf. Der Dorn und der Düsenkörper bilden einen ringförmigen Düsenspalt, dessen Spaltbreite durch eine axiale Verstellung des Dorns oder des Düsenkörpers veränderbar ist.

Während der Extrusion wird durch synchrone Stellbewegungen der Dorne und/oder durch synchrone Stellbewegungen der Düsenkörper die Düsenspaltbreite aller Extrusionswerkzeuge verändert. Dadurch erhalten die Vorformlinge in axialer Richtung ein sich änderndes Wanddickenprofil, welches auf den nachfolgenden Blasformvorgang so abgestimmt ist, dass die blasgeformten Kunststoffhohlkörper über ihre gesamte Länge eine vorgegebene Wandstärke aufweist. Es ist bekannt, für die Relativbewegung zwischen den Dornen und den Düsenkörpern, einen zentralen Stellantrieb zu verwenden, der über eine Traverse mit den Extrusionswerkzeugen verbunden ist und programmgesteuerte Stellbewegungen ausführt. Zur individuellen Einstellung des Schlauchlaufes sind an jedem Extrusionswerkzeug unabhängige Stellmittel vorgesehen, um den Dorn und den Düsenkörper zentrieren zu können. Die Extrusionswerkzeuge können separate Gehäuse aufweisen oder zusammen in einem Gehäuse angeordnet sein. Es ist möglich, dass jedes Extrusionswerkzeug von einer Plastifiziereinheit gespeist wird. Alternativ können die Extrusionswerkzeuge auch über eine Anordnung zur Schmelzeverteilung mit einem zentralen Extruder verbunden sein.

Bei der Herstellung von großvolumigen blasgeformten Behältern, z. B. Kunststoffkraftstofftanks, ist es in der Praxis üblich, nicht nur die Wanddickenverteilung des aus einem Stranggusskopf austretenden Vorformlings in Austragsrichtung sondern auch in Umfangsrichtung während der Extrusion dynamisch zu beeinflussen. Zur Veränderung der Schmelzeverteilung in Umfangsrichtung haben sich elastisch deformierbare Hülsen bewährt, die einen Wandabschnitt des Düsenspaltes bilden und während der Extrusion durch einen programmgesteuerten Kraftantrieb elastisch verformt werden. Das Verfahren sowie geeignete Vorrichtungen sind aus DE 28 23 999 C2 bekannt.

Weitere Verfahren und Vorrichtungen sind noch in den Druckschriften EP-A-0945245 und EP-A-1023984 beschrieben.

Mehrfachextrusionsköpfe kommen in Blasformanlagen zum Einsatz, um kostengünstig kleine Kunststoffhohlkörper zu produzieren, die beispielsweise für flüssige Körperpflegemittel, Reinigungsmittel, Motorenöle und dergleichen verwendet werden und ein Füllvolumen beispielsweise zwischen 200 ml und 2,5 l aufweisen. Diese als Verpackungen für Konsumerprodukte bestimmten Kunststoffhohlkörper weichen häufig von einer Zylinderform oder einer Kanisterform deutlich ab und haben beispielsweise die Form einer ovalen Flasche, nicht selten in Verbindung mit einer Handgriffmulde oder einem angeformten Griff. Um komplexe Behälterformen mit einer definierten einheitlichen Wandstärke produzieren zu können, ist es notwendig, die Düsenspaltgeometrie während der Extrusion der Vorformlinge in Abhängigkeit der Extrusionslänge zwischen einer Kreisringform und einer deutlich von Kreisringform abweichenden Geometrie zu verändern.

In der Publikation "Kunststoffe", Ausgabe 12/2010, Seiten 124 bis 127 wird ein Extrusionswerkzeug beschrieben, das eine Schmelzeverteilung der Vorformlinge in Umfangsrichtung ermöglicht und für den Einbau in einem Mehrfachextrusionskopf geeignet ist. Das als Nachrüstsatz konzipierte Werkzeug weist einen Düsenkörper mit zwei angeflanschten elektrischen Stellantrieben und einer elastisch deformierbaren Hülse auf. Die als Flexringhülse bezeichnete elastisch deformierbare Hülse hat einen mehrlagigen Aufbau und soll dadurch besonders flexibel sein. Allerdings hat die Flexringhülse dabei den Nachteil, dass sie keine Zugkräfte übertragen kann. Ein weiterer Nachteil dieser Flexringhülse liegt darin, dass durch die fehlende Formstabilität keine kontinuierlich elliptische Deformation möglich ist. Das Nachrüsten aller Extrusionswerkzeuge eines Mehrfachextrusionskopfes, der eine größere Zahl von parallel angeordneten Extrusionswerkzeugen aufweist, ist technisch aufwendig und teuer. Darüber hinaus ergeben sich aufgrund der engen Platzverhältnisse in einem Mehrfachextrusionskopf Einbauprobleme. Der Stichabstand zwischen zwei Extrusionswerkzeugen bestimmt den zur Verfügung stehenden Einbauraum. Bei einem kleinen Stichabstand bzw. bei engen Einbauverhältnissen ist es nicht möglich, sämtliche Extrusionswerkzeuge des Mehrfachextrusionskopfes mit einer Flexringdüse und zugeordneten Antrieben nachzurüsten. Damit verbleibt nur die Möglichkeit, den Mehrfachextrusionskopf mit einer geringeren Anzahl von Extrusionswerkzeugen zu betreiben und die Produktion zu drosseln. So sind nur Blasformanlagen mit reduzierter Ausstoßleitung zu realisieren.

Vor diesem Hintergrund liegt der Erfindung die Aufgabe zugrunde, ein Verfahren zur Herstellung blasgeformter Kunststoffhohlkörper anzugeben, welches bei beengten Einbauverhältnissen für den Betrieb eines Mehrfachextrusionskopfes geeignet ist und an sämtlichen Extrusionswerkzeugen des Mehrfachextrusionskopfes eine dynamische Profilierung des Düsenspaltes in Umfangsrichtung ermöglicht. Die technische Umsetzung des Verfahrens soll dabei einfach und kostengünstig möglich sein und somit einen schnellen Return of Invest bei voller Produktionssicherheit ermöglichen.

Gegenstand der Erfindung und Lösung dieser Aufgabe ist ein Verfahren nach Anspruch 1.

Die Erfindung setzt ein Verfahren zur Herstellung blasgeformter Kunststoffhohlkörper voraus, bei dem schlauchförmige Vorformlinge aus mehreren nebeneinander angeordneten Extrusionswerkzeugen eines Mehrfachextrusionskopfes synchron extrudiert und Blasformkavitäten einer Schließeinheit zugeführt werden, in der die Vorformlinge nach dem Schließen der Blasformkavitäten mittels Blasluft zu Kunststoffhohlkörpern aufgeweitet werden. Die Vorformlinge treten aus einem von einem Dorn und einem Düsenkörper begrenzten Düsenspalt der Extrusionswerkzeuge aus, wobei die Düsenspaltbreite der Extrusionswerkzeuge während der Extrusion durch synchrone Stellbewegungen der Dorne und/oder eine Stellbewegung des Düsenkörpers verändert wird. Erfindungsgemäß wird die Schmelzeverteilung der aus dem Mehrfachextrusionskopf austretenden Vorformlinge in Umfangsrichtung jeweils durch die Deformation einer den Düsenspalt begrenzenden elastischen Hülse während der Extrusion verändert, wobei zur radialen Verformung der elastisch deformierbaren Hülsen ein programmgesteuerter Antrieb verwendet wird, der mittels mechanischer Übertragungselemente synchron auf die Hülsen der Extrusionswerkzeuge wirkt. Dabei ist es für eine verschleißfreie Ausführung vorteilhaft, dass die Übertragungselemente so ausgelegt sind, dass sie sich der Deformationsbewegung des Kraftangriffspunktes anpassen. Die auf die parallel geschalteten Hülsen wirkenden Kräfte verformen die Hülsen in den Extrusionswerkzeugen synchron und verändern die Düsenspaltgeometrie in den Extrusionswerkzeugen. Dadurch kann die Schmelzeverteilung der Vorformlinge in Umfangsrichtung der Vorformlinge während der Extrusion der Vorformlinge dynamisch gesteuert werden. Erfindungsgemäß wird die Kraft zur Verformung der elastischen Hülsen von einem Antrieb erzeugt und mechanisch auf alle parallel geschalteten Hülsen übertragen. Dadurch kann das erfindungsgemäße Verfahren mit geringem technischen Aufwand und kostengünstig durchgeführt werden und ist auch bei beengten Einbauverhältnissen, das heißt einem kleinen Stichmaß zwischen den Extrusionswerkzeugen, einsetzbar. Zur Erhöhung der Positionierungsgenauigkeit ist es vorteilhaft, die Stellbewegung des zentralen Antriebs so zu untersetzen, dass ein großer Verstellweg auf der Antriebsseite eine kleine Deformationsbewegung zur Folge hat. Durch die entsprechende Erhöhung der Stellkräfte bei der Deformationsbewegung können dann auch vergleichsweise kleine und damit kostengünstige Antriebe eingesetzt werden. Eine Untersetzung kann beispielsweise durch ein mechanisches Getriebe, insbesondere eine Kniehebelanordnung realisiert werden. Die Extrusionswerkzeuge sind zweckmäßig in einer Reihe oder mehreren Reihen nebeneinander angeordnet. Die Verformung aller in einer Reihe nebeneinander angeordneter Hülsen erfolgt vorzugsweise in derselben Deformationsachse, wobei die Deformationsachse mit der Achse der nebeneinander angeordneten Extrusionswerkzeuge zusammenfällt und parallel zur Formtrennebene verläuft. Für eine beidseitige, symmetrische Deformation ist bei einer solchen Anordnung ein einziger zentraler Stellantrieb ausreichend.

Eine erste, besonders einfache Ausführung des erfindungsgemäßen Verfahrens sieht vor, dass die Übertragungselemente bei einer Stellbewegung des Antriebes jeweils an einer Seite auf eine außenliegende Mantelfläche der Hülsen wirken und die Hülsen an zumindest einem Gegenlager abgestützt und/oder angebunden werden. Das Gegenlager ist zweckmäßig um 180° versetzt zum Kraftangriffspunkt des Übertragungselementes angeordnet. Die Hülsen können auch an mehreren an ihrem Umfang angeordneten Gegenlagern abgestützt werden. Durch die Anzahl und Position der Gegenlager kann die Verformungsgeometrie beeinflusst werden. Sind Gegenlager und Übertragungselemente zumindest mittelbar mit der Hülse verbunden, so kann die Deformation der Hülse sowohl durch Druck- als auch durch Zugkräfte erfolgen.

Im Rahmen der Erfindung liegt es auch, eine Hülse einzusetzen, die im entspannten Zustand eine definierte Ovalität aufweist. Der Unterschied zwischen den beiden Hauptachsen ist dabei größer/gleich der für den Anwendungsfall maximal erforderlichen Durchmesserunterschied. Diese Hülse wird zweckmäßig so eingebaut, dass die große Hauptachse der Hülse in der Deformationsachse liegt. Die Übertragungselemente liegen formschlüssig an der Hülse an, ohne jedoch fest mit dieser verbunden sein zu müssen. Durch das Drücken der Übertragungselemente auf die Hülse wird auf die Hülse eine Druckkraft ausgeübt, die zu einer Verformung der Hülse führt. Die Auslegung der Hülse erlaubt es, diese so weit zu deformieren, dass der Durchmesser 90° zur Deformationsachse größer werden kann als der Durchmesser unter Krafteinwirkung in der Deformationsachse. Da bei dieser Ausführung die Hülse während des Betriebes immer unter Drucksspannung steht führt die Hülse bei einer Reduzierung der drückenden Deformationsbewegung eine Bewegung aus, die der einer ziehenden Bewegung einer im spannungsfreien Zustand runden Düsen entspricht. Diese Ausführung erlaubt es, dass die Hülse jede bekannte Struktur aufweist. Ebenso eignet sich die Verwendung einer vorovalisierten Hülse insbesondere für Stellelemente, die vorzugsweise nicht fest an die Hülse angeschlossen sind, wie beispielsweise Exzenter, Nocken, Schieber.

Gemäß einer bevorzugten Ausgestaltung des erfindungsgemäßen Verfahrens wirken die Übertragungselemente paarweise auf die Hülsen und üben bei einer Stellbewegung des Antriebes beidseits radiale Druckkräfte oder radiale Zugkräfte auf die Mantelfläche der Hülsen aus. Sofern nur Druckkräfte auf die Hülsen wirken, können sowohl einwandige als auch mehrlagige Hülsen (Flexringe) verwendet werden. Wenn die Hülsen auch durch Zugkräfte verformt werden, können keine mehrlagigen Flexringe verwendet werden; stattdessen werden vorzugsweise einwandige Hülsen eingesetzt. Sind die Übertragungselemente formschlüssig oder gelenkig mit den Hülsen verbunden, so können bei der beschriebenen Ausführung auch ziehende Kräfte übertragen werden.

Wenn auf die Hülsen gleichgroße Zug- oder Druckkräfte aufgebracht werden, so werden die Hülsen, insbesondere wenn einwandige Hülsen verwendet werden, symmetrisch verformt. Der Querschnitt der Hülsen nimmt dabei zumindest in der Ebene, in der die radialen Zug- und/oder Druckkräfte aufgebracht werden, einen ovalen Querschnitt oder zumindest eine an eine Elipse angenäherte Grundform an. Je nach Lagerung der Hülse und/oder der Lage des Kraftangriffspunktes in Extrusionsrichtung ist die Deformation der Hülse durch die Krafteinwirkung in Längsrichtung konstant oder erreicht ausgehend von einem Minimalwert am Hülseneinlauf zum Düsenaustritt hin einen Maximalwert.

Das erfindungsgemäße Verfahren ist nicht darauf beschränkt, dass die Hülsen durch radial auf die Mantelfläche der Hülsen wirkende Druck- oder Zugkräfte nur elastisch verformt werden. Im Rahmen der Erfindung ist es auch möglich, dass die Hülsen in radialer Richtung durch seitlich wirkende Druck- oder Zugkräfte verschwenkt oder radial verschoben werden. Schiebe- und Deformationsbewegungen können dabei miteinander kombiniert werden, um die Geometrie des Düsenspaltes während der Extrusion der Vorformlinge stark zu verändern. Durch die Kombination radial angreifender Zug- und Druckkräfte, die um 180° zueinander versetzt am Umfang der Hülsen angreifen, können die Hülsen seitwärts bewegt und je nach der Lagerung der Hülsen entweder verschwenkt oder radial verschoben werden. Sofern entgegengesetzt gerichteter radiale Stellbewegungen mit unterschiedlichem Stellweg ausgeführt werden, können die Hülsen sowohl elastisch verformt als auch gleichzeitig in radialer Richtung seitwärts bewegt werden. In all diesen Fällen ist eine sehr starke Profilierung der Düsenspaltgeometrie möglich. Eine Ausgestaltung des erfindungsgemäßen Verfahrens, welches eine sehr starke Profilierung der Düsenspaltgeometrie ermöglicht, sieht vor, dass eine erste Gruppe der Übertragungselemente mittels eines ersten Antriebes betätigt wird, wobei die Übertragungselemente der ersten Gruppe bei einer Stellbewegung des Antriebes gleichgerichtete Zug- oder Druckkräfte auf eine Mantelfläche der Hülsen ausüben, und dass eine zweite Gruppe der Übertragungselemente mittels eines zweiten Antriebes betätigt wird, wobei die Übertragungselemente der zweiten Gruppe an einem um 180° zum Kraftangriffspunkt der ersten Gruppe versetzten Umfangsabschnitt der Hülsen ebenfalls gleichgerichtete Druck- oder Zugkräfte auf die Mantelfläche der Hülsen ausüben. Durch programmgesteuerte Stellbewegungen der beiden Gruppen von Übertragungselementen können die Hülsen nicht nur durch beidseitiges Drücken oder durch beidseitiges Ziehen in einer durch die Kraftangriffspunkte vorgegebenen Deformationsachse deformiert sondern auch in Richtung der Deformationsachse verschwenkt oder radial verschoben werden.

Die Kraftangriffspunkte der Übertragungselemente werden bei allen zuvor beschriebenen Ausführungen des erfindungsgemäßen Verfahrens zweckmäßig an den Hülsen so festgelegt, dass ihre Kraftwirkungsrichtung mit einer Formtrennnaht der Blasformkavitäten fluchtet oder senkrecht zu der Formtrennebene ausgerichtet ist.

Die Düsenkörper der Extrusionswerkzeuge bilden zweckmäßig eine als Einheit verstellbare Düsenkörperbaugruppe, die mittels eines programmgesteuerten Antriebes während der Extrusion der Vorformlinge horizontal verstellt und/oder gekippt wird. Durch eine Verstellung der Düsenkörperbaugruppe ist eine weitere Beeinflussung der Düsenspaltgeometrie während der Extrusion der Vorformlinge möglich. Vorzugsweise sieht die Erfindung den Einsatz von zwei programmgesteuerten Antrieben vor, welche die Düsenbaugruppe in zwei Achsen horizontal verschieben oder verschwenken können. Die Verstellung der Düsenkörperbaugruppe kann ebenfalls in die Programmsteuerung für die Profilierung der Vorformlinge einbezogen werden. Die Wirkungsrichtung des Antriebes zur Horizontalverstellung oder Kippverstellung ist beliebig festlegbar. Vorzugsweise wird die Wirkungsrichtung des Antriebs so festgelegt, dass die Wirkungsrichtung des Antriebes zur Horizontalverstellung der Düsenbaugruppe mit einer durch den Kraftangriffspunkte der Übertragungselemente vorgegebenen Deformationsachse fluchtet oder sich in einer deformationsneutralen Achse der Hülsen erstreckt. Es ist im Sinne der Erfindung, dass die Antriebe sowohl durch das Programm zur Profilierung der Vorformlinge angesteuert werden als auch zur Zentrierung der Dorne innerhalb der Extrusionswerkzeuge verwendet werden.

In den Extrusionswerkzeugen können unabhängige Grundeinstellungen vorgenommen werden, wobei im Zuge dieser Einstellungen die Hülsen vordeformiert werden und/oder die Position der Hülsen korrigiert wird und/oder der Düsenkörper und der Dorn relativ zueinander verstellt werden. Die Möglichkeit, an den Extrusionswerkzeugen unabhängige Grundeinstellungen vornehmen zu können, ist vorteilhaft, da bei der Herstellung von kleinen blasgeformten Hohlkörpern bereits kleine Unterschiede des Düsenspaltes von einem Extrusionswerkzeug zum anderen Extrusionswerkzeug signifikante Wanddickenunterschiede der blasgeformten Hohlkörper zu Folge haben. Ferner ist zu berücksichtigen, dass die Extrusionswerkzeuge eines Mehrfachextrusionskopfes von einer Plastifiziereinheit oder auch von mehreren Plastifiziereinheiten mit Kunststoffschmelze versorgt werden können. Beide Varianten können aus verschiedenen Gründen zu rheologischen Unterschieden zwischen den einzelnen Vorformlingen führen. Das rheologische Verhalten der Kunststoffschmelze, Fertigungstoleranzen in den Fließkanälen der Extrusionswerkzeuge und Temperatureinflüsse können dazu führen, dass der Schlauchlauf der parallel aus den Extrusionswerkzeugen austretenden Vorformlingen sowie die radiale Wanddickenverteilung der einzelnen Vorformlinge voneinander abweichen. Zur Korrektur weisen die Extrusionswerkzeuge daher vorzugsweise individuell zugeordnete und voneinander unabhängig betätigbare Stellelemente zur Veränderung einer Grundeinstellung der Düsenspaltgeometrie auf. Gemäß einer bevorzugten Ausführung der Erfindung sind an den Übertragungselementen Stellelemente angeordnet, wobei durch Betätigung dieser Stellelemente Grundeinstellungen der Extrusionswerkzeuge durch eine Vordeformation und/oder eine Positionskorrektur der in den Extrusionswerkzeugen verwendeten Hülsen veränderbar sind. Eine gezielte Voreinstellung der Hülsen kann ferner auch zum Erreichen einer optimalen Wanddickenverteilung der blasgeformten Hohlkörper vorteilhaft sein.

Gegenstand der Erfindung ist auch ein zur Durchführung des beschriebenen Verfahrens geeigneter Mehrfachextrusionskopf nach Anspruch 11.

Zum grundsätzlichen Aufbau des Mehrfachextrusionskopfes, gehören mehrere nebeneinander angeordnete Extrusionswerkzeuge zur Erzeugung schlauchförmiger Vorformlinge und ein Stellantrieb zur synchronen Veränderung eines Düsenspaltes der Extrusionswerkzeuge. Die Extrusionswerkzeuge sind jeweils mit mindestens einer elastisch deformierbaren Hülse ausgestattet, die einen Wandabschnitt des Düsenspaltes bildet und an einem Dorn oder in einem den

Dorn umgebenden Düsenkörper angeordnet ist. Zur radialen elastischen Verformung der Hülsen ist ein programmgesteuerter Antrieb vorgesehen, der mittels mechanischer Übertragungselemente synchron auf die Hülsen der Extrusionswerkzeuge wirkt. Als Übertragungselemente können beliebige Mittel eingesetzt werden, die innenseitig oder außenseitig auf eine Mantelfläche der Hülsen wirken und drückende, ziehende oder reibende Bewegungen auf die Hülsen übertragen. Vorteilhafte Ausgestaltungen des erfindungsgemäßen Mehrfachextrusionskopfes werden in den Patentansprüchen 12 bis 30 beschrieben und nachfolgend anhand von Ausführungsbeispielen erläutert. Es zeigen schematisch:
- **Fig. 1**: eine mit einem Mehrfachextrusionskopf ausgestattete Blasformanlage zur Herstellung blasgeformter Kunststoffhohlkörper,
- **Fig. 2**: eine Seitenansicht des Mehrfachextrusionskopfes in einer gegenüber Fig. 1 vergrößerten Darstellung, und zwar ausschnittsweise und im Längsschnitt,
- **Fig. 2a**: eine weitere Ausgestaltung des Mehrfachextrusionskopfes in einer Seitenansicht,
- **Fig. 3**: einen Schnitt durch den in Fig. 2/2a dargestellten Mehrfachextrusionskopf in der Schnittebene A-A der Fig. 2/2a, ebenfalls ausschnittsweise,
- **Fig. 4 bis 16**: Schnittdarstellungen entsprechend der Schnittdarstellung in Fig. 3 von weiteren Ausgestaltungen des Mehrfachextrusionskopfes.

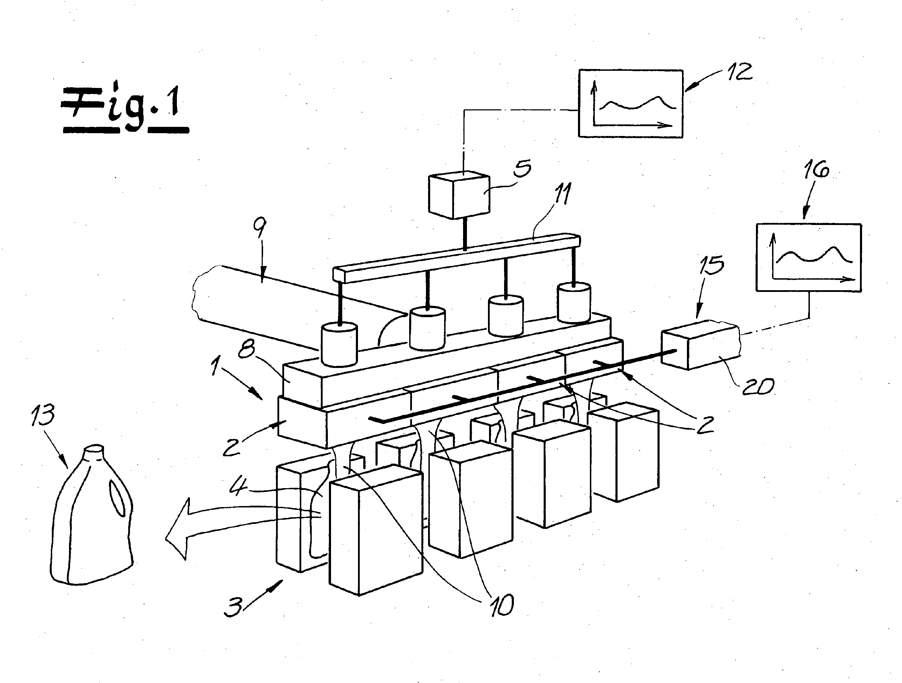

Die in Fig. 1 schematisch dargestellte Blasformanlage umfasst einen Mehrfachextrusionskopf 1, mit mehreren nebeneinander angeordneten Extrusionswerkzeugen 2 eine Schließeinheit 3, die eine der Anzahl der Extrusionswerkzeuge entsprechende Anzahl von Blasformkavitäten 4 aufweist, sowie ein Stellantrieb 5 zur Synchronverstellung eines Düsenspaltes in allen Extrusionswerkzeugen 2. Die Extrusionswerkzeuge 2 sind in einer Reihe nebeneinander angeordnet und erstrecken sich parallel zu einer Formtrennebene der Blasformkavitäten 4. Die Extrusionswerkzeuge 2 weisen jeweils einen Dorn 6 sowie einen den Dorn 6 mit einem Düsenspalt s umgebenden Düsenkörper 7 auf. Die Extrusionswerkzeuge 2 können voneinander unabhängige Gehäuse aufweisen. Im Ausführungsbeispiel sind sie in einem Gehäuse integriert. Die Extrusionswerkzeuge 2 sind über einen Schmelzeverteiler 8 mit einer Plastifiziereinheit 9, z. B. einem Extruder 9 verbunden. Die Kunststoffschmelze tritt in Form schlauchartiger Vorformlinge 10 aus den nebeneinander angeordneten Extrusionswerkzeugen 2 aus. Dabei wird die Düsenspaltbreite s der Extrusionswerkzeuge 2 während der Extrusion der Vorformlinge 10 durch synchrone Stellbewegungen der Dorne 6 und/oder durch eine Stellbewegung des Düsenkörpers 7 verändert. Die Steuerung dieser Bewegung folgt mittels des Stellantriebes 5, der über eine Traverse 11 mit den einzelnen Extrusionswerkzeuge 2 verbunden ist und programmgesteuerte Stellbewegungen nach Vorgabe einer Profilkurve 12 ausführt.

Die Vorformlinge 10 werden den Blasformkavitäten 4 der Schließeinheit 3 zugeführt und dort nach dem Schließen der Blasformkavitäten 4 mittels Blasluft zu Kunststoffhohlkörpern 13 aufgeweitet. Im Ausführungsbeispiel werden Kunststoffflaschen, z. B. für flüssige Reinigungsmittel geformt, die ein asymmetrisches Design aufweisen.

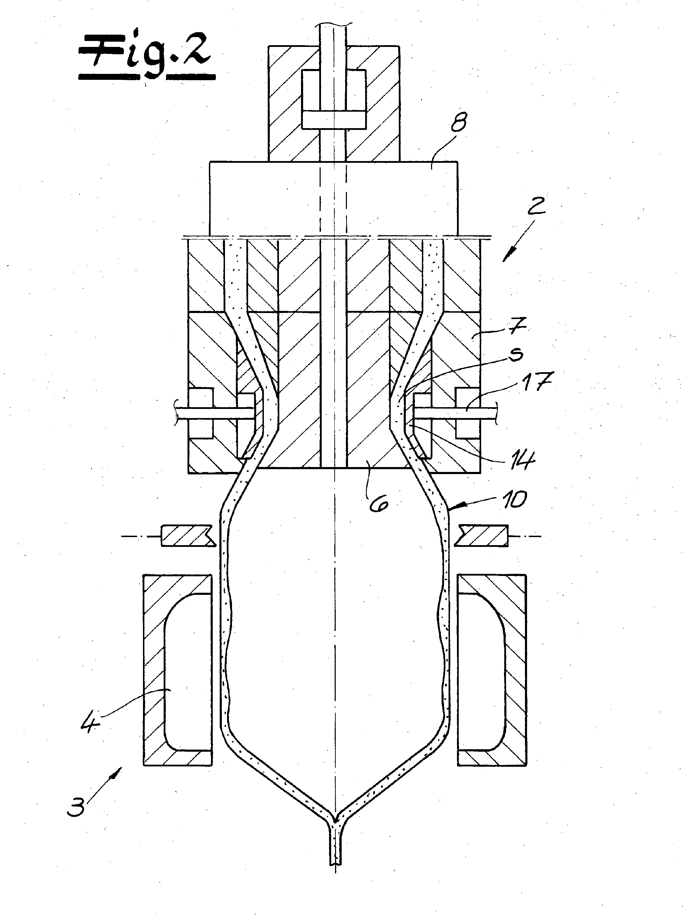

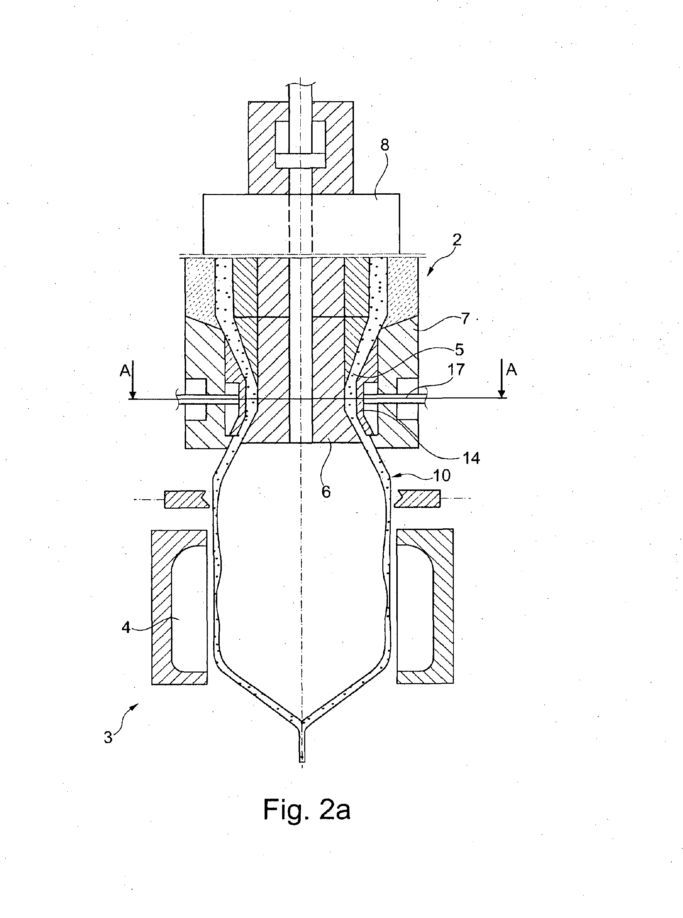

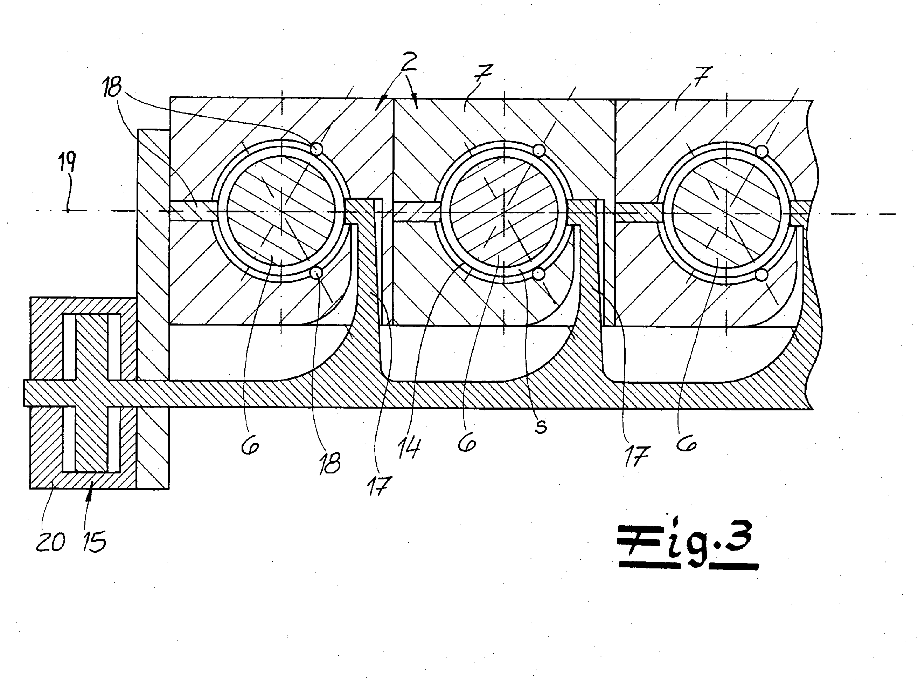

Aus einer vergleichenden Betrachtung der Fig. 2 und 3 wird deutlich, dass die Extrusionswerkzeuge 2 jeweils mit mindestens einer elastisch deformierbaren Hülse 14 ausgestattet sind, die einen Wandabschnitt des Düsenspaltes s bildet und im Ausführungsbeispiel im Düsenkörper 7 angeordnet ist. Alternativ können die Dorne 6 mit einer entsprechenden Hülse 14 ausgestattet werden. Die Hülsen 14 bestehen im Regelfall aus Metall und sind dünnwandig. Andere Hülsenwerkstoffe, z. B. temperaturbeständige Kunststoffe und Verbundmaterialen, können ebenfalls eingesetzt werden. Bevorzugt sind Hülsen, die sowohl durch radiale Druckkräfte als auch durch radiale Zugkräfte verformt werden können. Während der Extrusion der Vorformlinge 10 wird die Querschnittsgeometrie der Hülsen 14 verändert, um das Profil des Düsenspaltes s zu beeinflussen. Zur radialen elastischen Verformung der Hülsen 14 ist ein Antrieb 15 vorgesehen, der nach einem durch eine Profilkurve 16 schematisch angedeuteten Programm mittels mechanischer Übertragungselemente 17, 17' synchron auf die Hülsen 14 der Extrusionswerkzeuge 2 wirkt.

Die Übertragungselemente 17, 17' wirken auf eine außenliegende oder innenliegende Mantelfläche der Hülsen 14. Im Ausführungsbeispiel der Fig. 3 drücken die Übertragungselemente 17 bei einer Stellbewegung jeweils an einer Seite auf eine außenliegende Mantelfläche der Hülsen 14, die an mehreren an ihrem Umfang angeordneten Gegenlagern 18 abgestützt sind. Die Anzahl und Position der Gegenlager 18 beeinflusst den Querschnitt der Hülsen 14, der sich bei der Betätigung der einseitig wirkenden Übertragungselemente 17 durch elastische Verformung einstellt. Im Ausführungsbeispiel sind drei Gegenlager 18 vorgesehen, die in äquidistanten Abständen am Umfang der Hülsen 14 angeordnet sind, wobei eines der Gegenlager um 180° zum Kraftangriffspunkt des Übertragungselementes 17 versetzt positioniert ist und zusammen mit dem Kraftangriffspunkt die Deformationsachse 19 festlegt. Dabei kann die Hülse an das Gegenlager angebunden sein. Die Deformationsachse 19 erstreckt sich im Ausführungsbeispiel parallel zu einer Formtrennebene der Blasformkavitäten. Sind die Übertragungselemente mit der flexiblen Hülse verbunden, so können auch ziehende Deformationen ausgeführt werden. In diesem Fall ist das vorgenannte Gegenlager ausreichend.

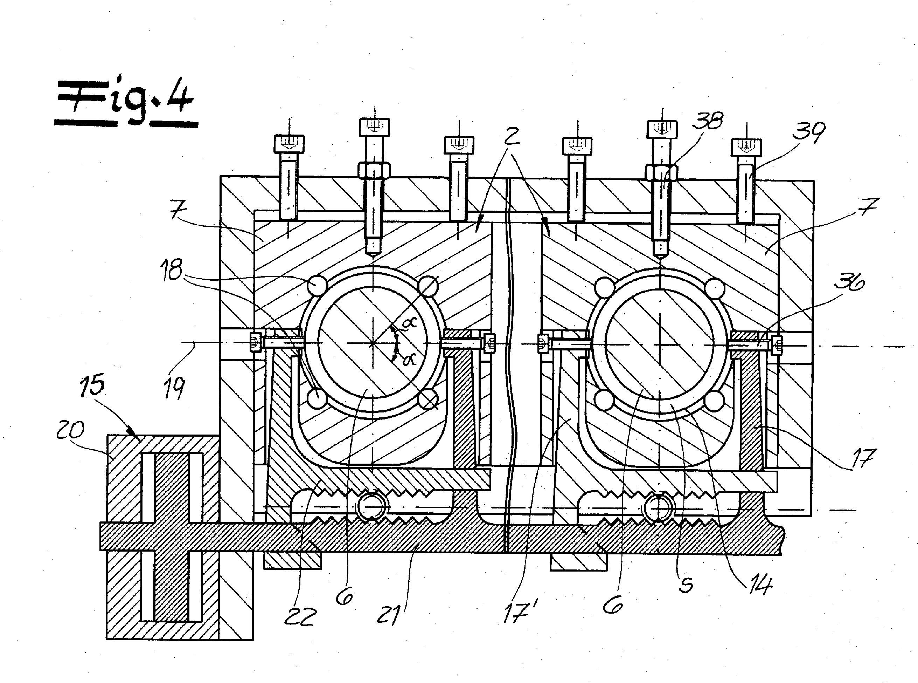

Im Ausführungsbeispiel der Fig. 2a weist der Düsenkörper 7 eine konkave Lagerfläche auf und ist an dieser verschwenkbar angeordnet. Zum Zwecke einer Positionskorrektur kann der Düsenkörper 7 Kippbewegungen ausführen. Im Ausführungsbeispiel der Fig. 4 wirken die Übertragungselemente 17 17' paarweise auf die Hülsen 14 der Extrusionswerkzeuge 2 und üben bei einer Stellbewegung beidseits Druck auf die zugeordnete Hülse 14 aus. Die beiden Übertragungselemente 17, 17' eines jeden Paares sind kinematisch gekoppelt und führen bei einer Stellbewegung des Antriebs 15 eine gegenläufige Zangenbewegung aus. Der Antrieb 15 weist einen pneumatischen, hydraulischen oder elektromechanischen Antriebskopf 20 zur Erzeugung einer Linearbewegung eines Schubelementes 21 auf. Das Schubelement 21 wirkt mit einem linear beweglichen Stellelement 22 zusammen, welches eine von der Linearbewegung des Schubelementes 21 abgeleitete reversierende Stellbewegung ausführt. Die an einer Seite auf die Hülsen 14 wirkenden Übertragungselemente 17 sind an dem Schubelement 21 angeordnet. Die paarweise zugeordneten Übertragungselemente 17', die in Kraftwirkungsrichtung auf eine gegenüberliegende Seite der Hülsen 14 wirken, sind an das Stellelement 22 angeschlossen. Zusätzlich können die Hülsen 14 entsprechend der Darstellung in Fig. 4 an Gegenlagern 18 abgestützt sein. Vorzugsweise sind vier Gegenlager 18 vorgesehen, die unter einem Winkel α von ± 45° zur Deformationsachse 19 ausgerichtet sind. Die Deformationsachse 19 ist durch die Kraftangriffspunkte der Übertragungselemente 17, 17' festgelegt und erstreckt sich parallel zu einer Formtrennebene der Blasformkavitäten.

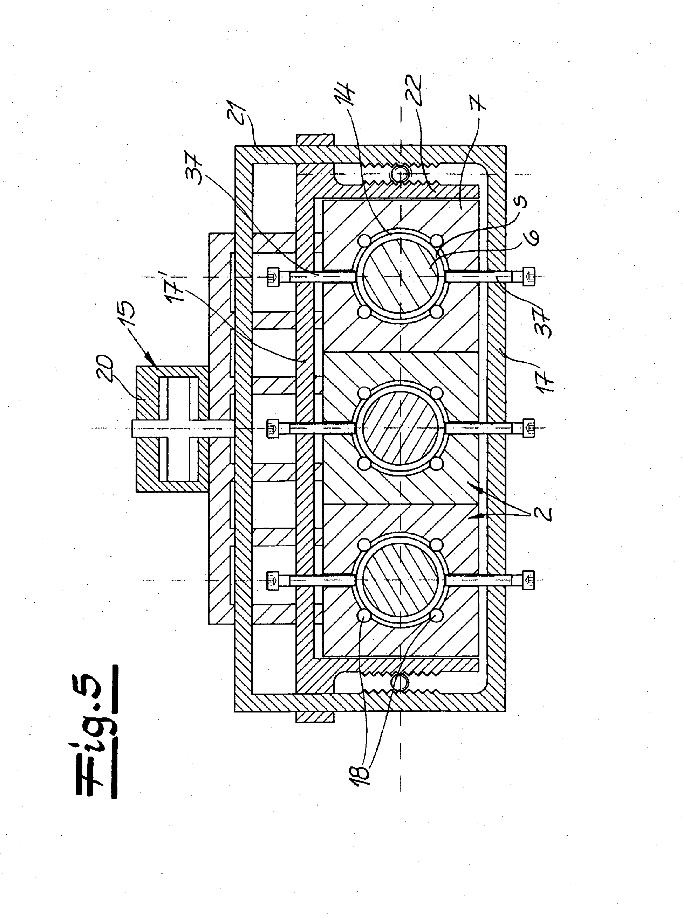

Eine gleichwirkende konstruktive Abwandlung ist in Fig. 5 dargestellt. Im Ausführungsbeispiel der Fig. 5 ist die durch die Kraftangriffspunkte der Übertragungselemente 17, 17' vorgegebene Kraftwirkungsrichtung senkrecht zur Formtrennebene der Blasformkavitäten 4 ausgerichtet.

An den Extrusionswerkzeugen können unabhängige Grundeinstellungen vorgenommen werden, wobei im Zuge dieser Einstellungen die Hülsen der Extrusionswerkzeuge vordeformiert werden und/oder die Position der Hülsen korrigiert wird und/oder der Düsenkörper und der Dorn der Extrusionswerkzeuge relativ zueinander verstellt werden. Zur Veränderung der Grundeinstellung der Extrusionswerkzeuge sind individuell zugeordnete und unabhängig voneinander betätigbare Stellelemente vorgesehen. Im Ausführungsbeispiel der Fig. 4 und 5 sind an den Übertragungselementen 17, 17' Stellelemente 36, 37 angeordnet, die radial auf die Wandfläche der zugeordneten Hülsen 14 wirken. Durch Betätigung dieser Stellelemente 36, 37 kann jeweils die dem Stellelement zugeordnete Hülse 14 deformiert oder hinsichtlich ihrer Lage korrigiert werden. Des Weiteren sind Stellelemente 38, 39 vorgesehen, die auf den Düsenkörper 7 der Extrusionswerkzeuge 2 wirken und eine Positionskorrektur des Düsenkörpers 7 relativ zum Dorn 6 des Extrusionswerkzeuges ermöglichen. Die Veränderung einer Grundeinstellung an den Extrusionswerkzeugen 2 ist vorteilhaft, da bei der Herstellung von kleinen blasgeformten Hohlkörpern ein kleiner Unterschied im radialen Düsenspaltverlauf von einem Extrusionswerkzeug zum anderen Extrusionswerkzeug große Wanddickenunterschiede der Vorformlinge zur Folge haben. Daher ist es wichtig, dass zum Ausgleich von Fertigungstoleranzen jedes auf die Hülse wirkende Übertragungselement 17, 17' Ausgleichselemente aufweist. Ferner können das rheologische Verhalten der Kunststoffschmelze sowie Fertigungstoleranzen in den Fließkanälen der Extrusionswerkzeuge 2 und Temperaturunterschiede dazu führen, dass der Schlauchlauf der aus den Extrusionswerkzeugen 2 austretenden Vorformlinge 10 sowie die radiale Wanddickenverteilung der einzelnen, aus den verschiedenen Extrusionswerkzeugen 2 austretenden Vorformlinge 10 voneinander abweichen. Zur Korrektur dieser Effekte kann es zweckmäßig sein, wenn an jeder Hülse 14 durch die beschriebenen Stellelemente 36, 37 die Grundform der Hülsen und deren Position korrigiert werden kann. Entsprechendes gilt für eine Korrektur der Lage zwischen Düsenkörper 7 und Dorn 6 unter Verwendung der Stellelemente 38, 39.

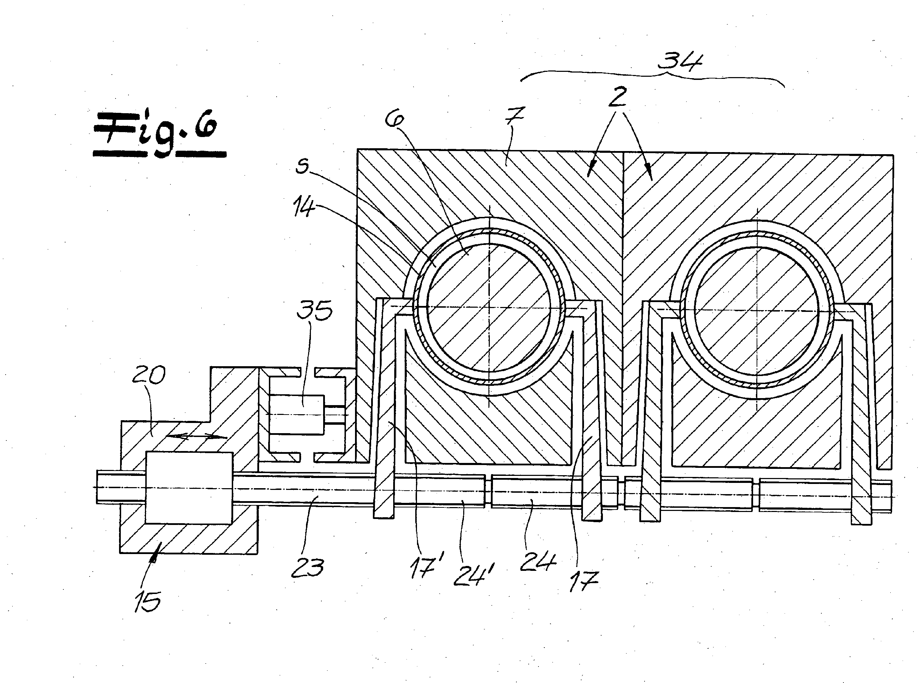

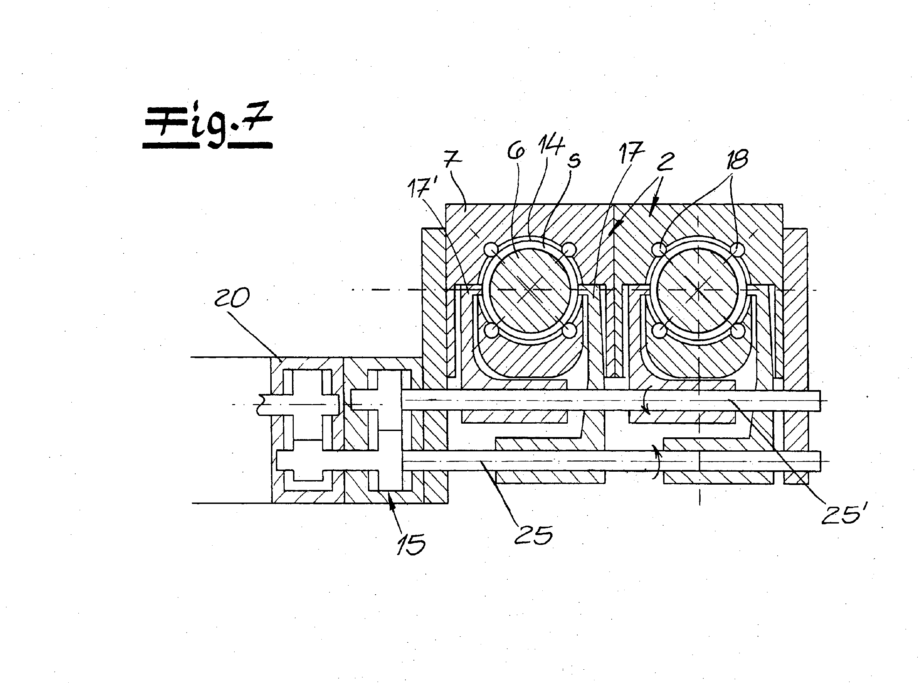

Auch in den Ausführungsbeispielen der Fig. 6 und 7 wirken die Übertragungselemente 17, 17' paarweise auf die Hülsen 14 und üben bei einer Stellbewegung beidseits Druck auf die zugeordnete Hülse 14 aus. Die Übertragungselemente 17, 17' eines jeden Paares sind kinematisch gekoppelt und führen bei einer Stellbewegung des Antriebes 15 eine gegenläufige Zangenbewegung aus. Gemäß der Darstellung in Fig. 6 ist der Antrieb 15 als Spindelantrieb ausgebildet und weist eine drehbar gelagerte Abtriebsspindel 23 mit rechtsgängigen und linksgängigen Gewindeabschnitten 24, 24' auf, wobei jeweils ein Übertragungselement 17 der den Hülsen 14 zugeordneten Übertragungselement-Paare an einen rechtsgängigen Gewindeabschnitt 24 und das andere Übertragungselement 17' des Paares an den linksgängigen Gewindeabschnitt 24' angeschlossen ist.

Im Ausführungsbeispiel der Fig. 7 weist der ebenfalls als Spindelantrieb ausgebildete Antrieb 15 zwei kinematisch gekoppelte gegensinnig rotierende Abtriebsspindeln 25, 25' auf, wobei jeweils ein Übertragungselement 17 der paarweise den Hülsen 14 zugeordneten Übertragungselemente an eine erste Abtriebsspindel 25 und das andere Übertragungselement 17' des Paares an die zweite Abtriebsspindel 25' angeschlossen ist.

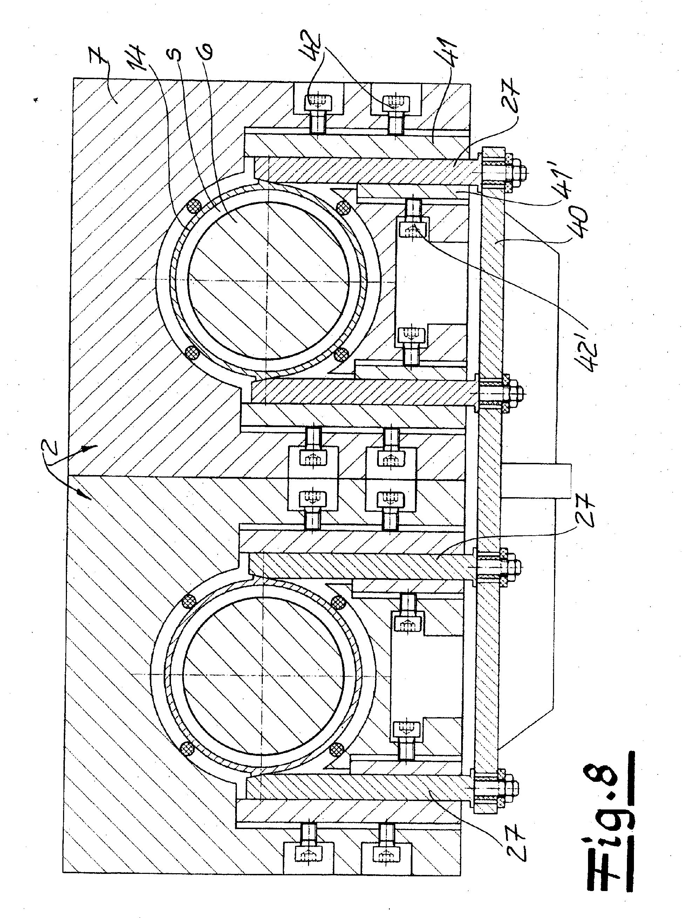

Die Übertragungselemente 17 können auch als Schieber 27 ausgebildet sein, wobei die Schieber 27 jeweils eine Steuerfläche aufweisen, die mit einer Gegenfläche an der zugeordneten Hülse 14 zusammenwirkt. Eine solche konstruktive Lösung ist in Fig. 8 dargestellt. Die Steuerflächen bestehen aus einem angefasten Ende der Schieber 27. Die Schieber 27 üben bei einer Stellbewegung beidseits Druck auf die zugeordnete Hülse 14 aus und verformen diese elliptisch. Die rückseitig an eine gemeinsame Traverse 40 angeschlossenen Schieber 27 sind zwischen Druckplatten 41, 41' geführt, deren Position durch Stellmittel 42, 42' einstellbar ist. Durch Einstellen der Druckplatten 41, 41' können an den Extrusionswerkzeugen 2 individuelle Grundeinstellungen vorgenommen werden. Im Rahmen dieser Grundeinstellungen können die Positionen der Hülsen 14 individuell korrigiert werden. Ferner sind individuelle Vordeformationen der Hülsen 14 möglich.

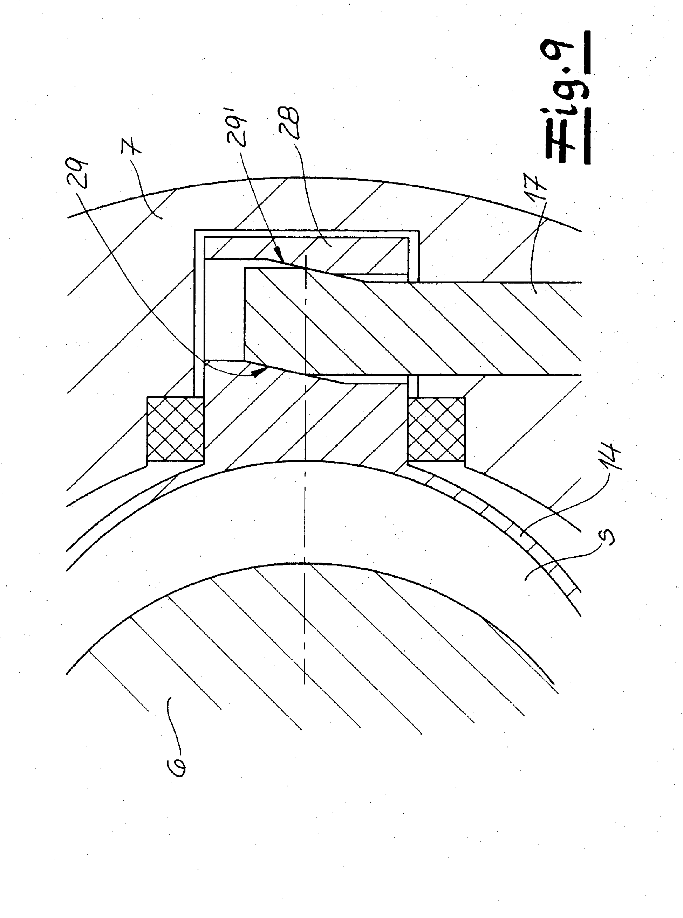

Der Anschlussbereich zwischen dem als Schieber 27 ausgebildeten Übertragungselement 17 und einer Hülse 14 kann so gestaltet werden, dass bei einer Stellbewegung der Übertragungselemente 17 Zugkräfte auf die Mantelfläche der Hülsen 14 übertragen werden und die Hülsen 14 durch beidseitig angreifende Zugkräfte elliptisch verformt werden. In diesem Fall wirken die Schieber 27 auf Steuerflächen, die mit den Hülsen 14 verbunden sind. Der Anschlussbereich zwischen den Übertragungselementen 17 und den Hülsen 14 kann ferner auch so ausgebildet werden, dass bei einer Stellbewegung der Übertragungselemente 17 in Abhängigkeit des Stellweges eine Zugkraft oder eine Druckkraft auf die Hülsen übertragen wird. Ein entsprechendes Anschlusselement 28 ist in Fig. 9 dargestellt. Das Übertragungselement 17 greift in das Anschlusselement 28 ein, das mit dem Mantel der Hülse 14 verbunden ist und Steuerflächen 29 zur Übertragung radialer Druckkräfte und Steuerflächen 29' zur Übertragung radialer Zugkräfte aufweist.

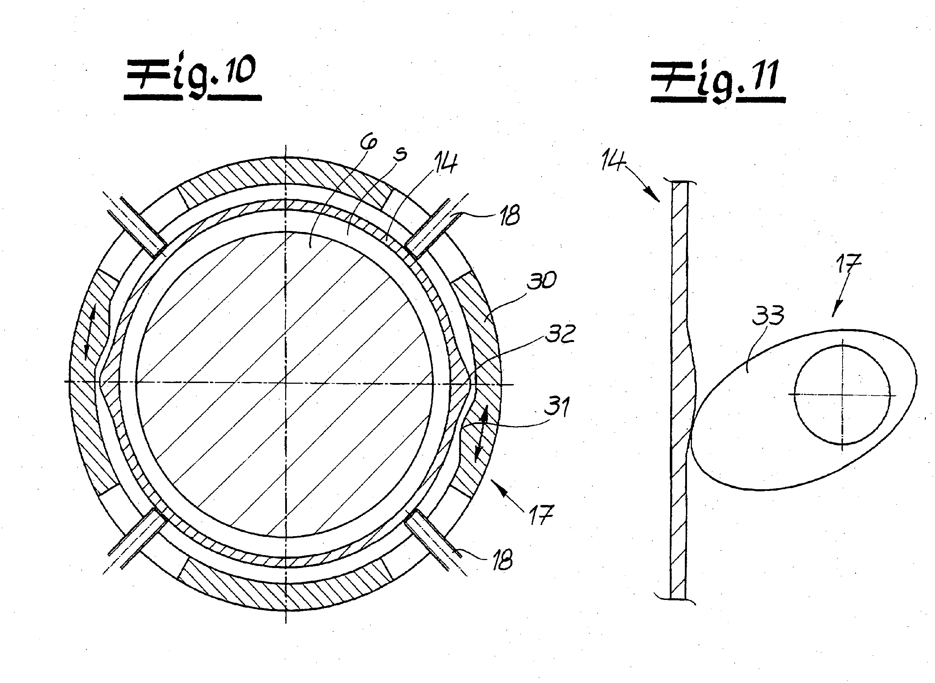

Die Fig. 10 zeigt ein Übertragungselement 17, welches als Drehring 30 ausgebildet ist. Es weist an einer zur Hülse 14 benachbarten Umfangsfläche mindestens einen Nocken 31 auf, der bei einer Drehbewegung des Drehringes 30 mit einer Steuerkontur 32 an der Hülse 14 zusammenwirkt und Druck auf die zugeordnete Hülse 14 ausübt. Jeder der parallel geschalteten Extrusionswerkzeuge 2 kann mit einem Drehring 30 ausgestattet werden, wobei die Drehringe 30 kinematisch gekoppelt sind.

Die Fig. 11 zeigt einen drehbar gelagerten Exzenter 33, der als Übertragungselement 17 ebenfalls geeignet ist und bei einer Drehbewegung auf eine zugeordnete Steuerkontur an der Hülse wirkt und Druck auf die zugeordnete Hülse 14 ausübt. Anstelle von exzentrisch gelagerten Übertragungselementen können auch Gelenke als Übertragungselemente eingesetzt werden. Grundsätzlich sind als Übertragungselemente jegliche mechanische Elemente einsetzbar, die drückende, ziehende oder reibende Bewegungen in radialer Richtung auf die Hülsen übertragen, um die Hülsen zu deformieren, radial zu verschieben oder zu verschwenken.

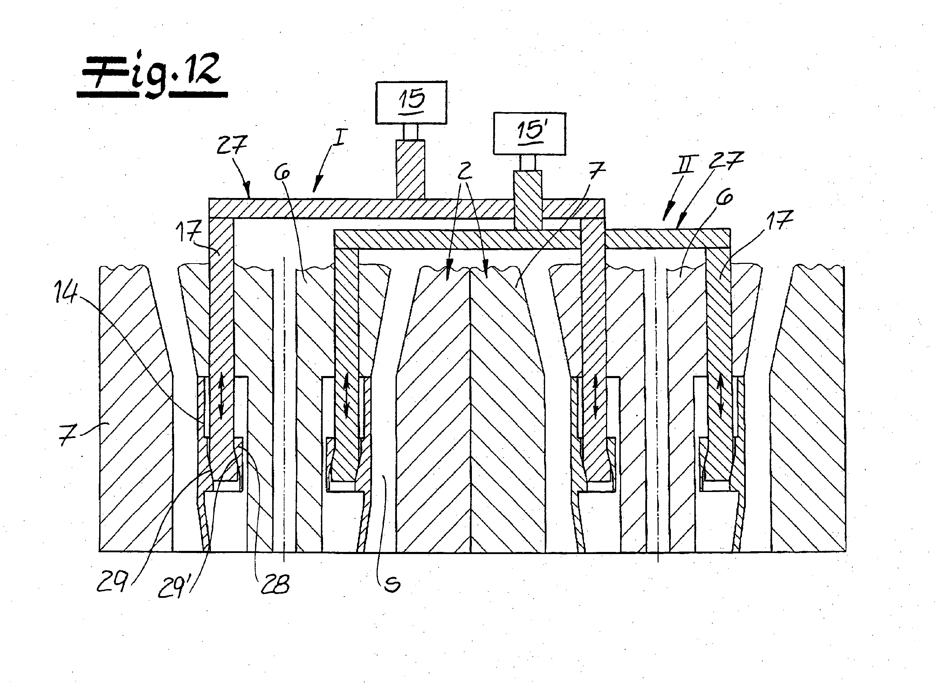

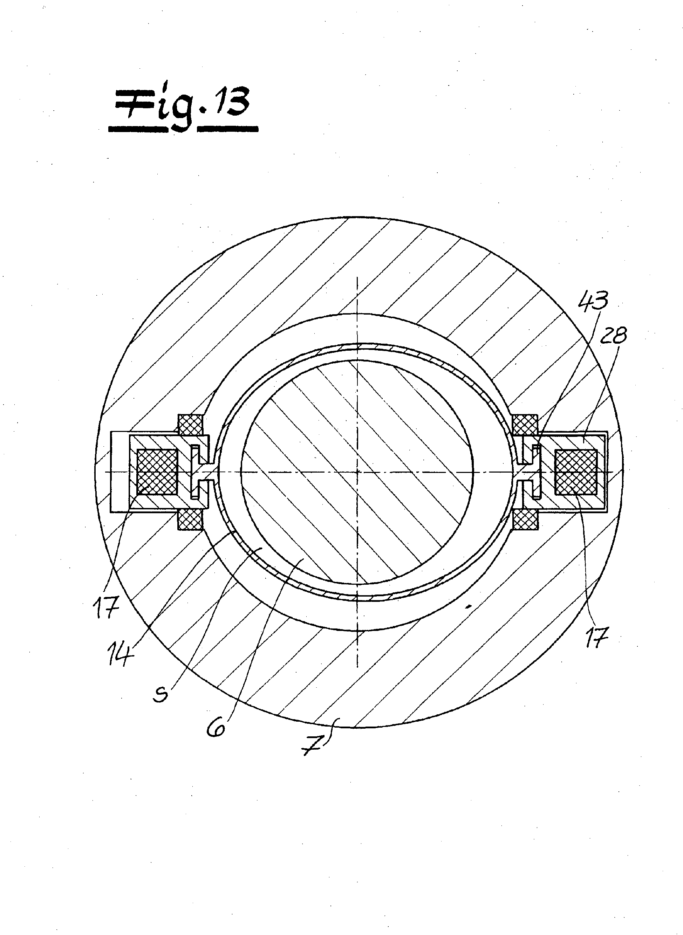

In den nachfolgend beschriebenen Ausführungsbeispielen sind die Hülsen 14 der Extrusionswerkzeuge 2 nicht nur elastisch verformbar, sondern in radialer Richtung auch verschiebbar oder verschwenkbar. Die Schiebebewegungen und Deformationen der Hülsen durch Druck- oder Zugkräfte werden durch ein Programm gesteuert, welches während der Extrusion der Vorformlinge 10 abläuft. Für die erforderlichen Steuerbewegungen sind zwei Antriebe 15, 15' vorgesehen. Gemäß der Darstellung in Fig. 12 wird eine erste Gruppe I der Übertragungselemente 17 mittels eines ersten Antriebes 15 betätigt, wobei die Übertragungselemente 17 der ersten Gruppe I bei einer Stellbewegung des Antriebes 15 gleichgerichtete Zug- oder Druckkräfte auf eine Mantelfläche der Hülsen 14 ausüben. Eine zweite Gruppe II der Übertragungselemente 17 ist mittels des zweiten Antriebes 15' betätigbar, wobei die Übertragungselemente 17 der zweiten Gruppe II an einem um 180° zum Kraftangriffspunkt der ersten Gruppe I versetzten Umfangsabschnitt der Hülsen 14 ebenfalls gleichgerichtete Druck- oder Zugkräfte auf die Mantelfläche der Hülsen ausüben. Durch programmgesteuerte Stellbewegungen der beiden Gruppen I, II von Übertragungselementen 17 werden die Hülsen 14 durch beidseitiges Drücken oder durch beidseitiges Ziehen in einer durch die Kraftangriffspunkte vorgegebenen Deformationsachse 19 deformiert. Durch aufeinander abgestimmte Bewegungen der beiden Gruppen I, II können die Hülsen 14 auch in Richtung der Deformationsachse 19 verschwenkt oder radial verschoben werden, wobei sich die in Fig. 13 beispielhaft dargestellte Düsenspaltgeometrie zwischen Dorn 6 und Düsenkörper 7 einstellen lässt. Die Übertragungselemente 17 greifen in Anschlusselemente 28 ein, die durch Formschlusselemente 43 lösbar mit der Hülse 14 verbunden sind. Die elastisch deformierbare Hülse 14 ist austauschbar, ohne dass die Anschlusselemente 28 und die zugeordneten Übertragungselemente 17 ausgebaut werden müssen. Im Ausführungsbeispiel der Fig. 12 führen die Schieber 27 vertikal gerichtete Stellbewegungen aus. Die beschriebene Kinematik lässt sich auch mit horizontal ausgerichteten horizontalen verschiebbaren Schiebern realisieren.

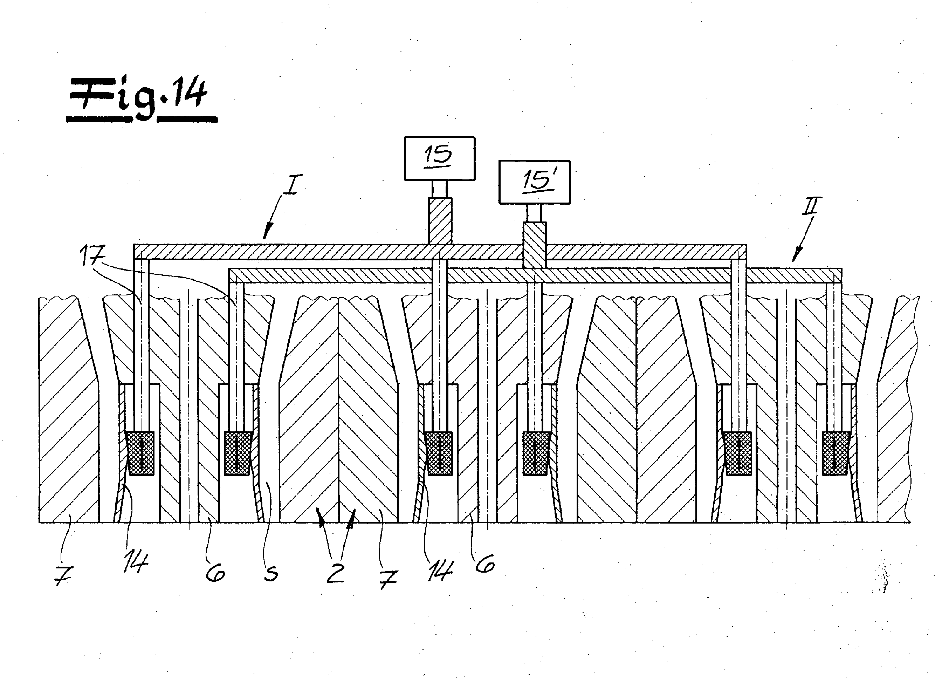

Auch im Ausführungsbeispiel der Fig. 14 ist eine erste Gruppe I der Übertragungselemente 17 einem ersten Antrieb 15 zugeordnet und ist eine zweite Gruppe II der Übertragungselemente 17 einen zweiten Antrieb 15' zugeordnet, wobei die erste Gruppe I der Übertragungselemente 17 an einer ersten Seite der Hülsen 14 gleichgerichtet Druckkräfte auf die Hülsen 14 ausübt und wobei die zweite Gruppe II der Übertragungselemente an einem um 180° zum Kraftangriffspunkt der ersten Gruppe I versetzten Umfangsabschnitt der Hülsen 14 ebenfalls gleichgerichtete Druckkräfte auf die Hülsen ausübt. Die beiden Antriebe 15, 15' sind an eine Programmsteuerung zur Steuerung ihrer Stellbewegungen angeschlossen. Die Hülsen 14 können durch gegenläufige, im Betrag gleichgroße Verstellwege deformiert oder durch gegenläufige, im Betrag unterschiedliche Verstellwege deformiert sowie in Richtung der Deformationsachse radial verlagert werden.

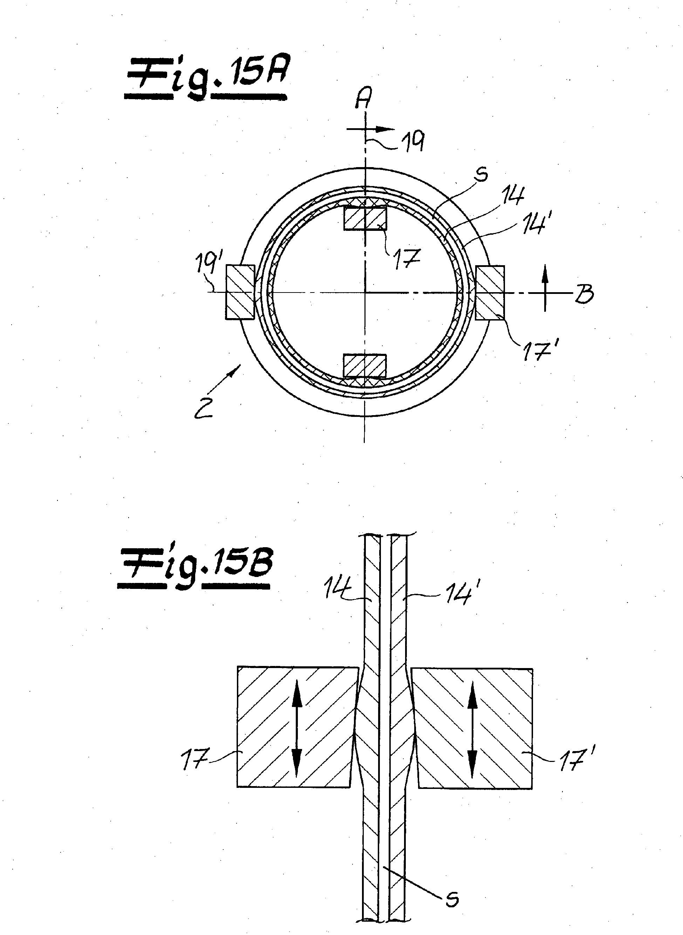

Die Extrusionswerkzeuge 2 können auch mit zwei Hülsen 14, 14' ausgestattet werden, wobei eine Hülse 14 am Dorn 6 des Extrusionswerkzeuges 2 und die andere Hülse 14 ' im Düsenkörper 7 angeordnet ist. Die dornseitig angeordnete Hülse 14 bildet einen Wandabschnitt an der Innenseite des Düsenspaltes s und die im Düsenkörper angeordnete Hülse einen außenseitigen Wandabschnitt des Düsenspaltes. Gemäß der Querschnittsdarstellung in Fig. 15a bilden die auf die äußere Hülse 14' wirkenden Kraftübertragungselemente 17' eine erste Deformationsachse 19' und die auf die innere Hülse 14 wirkenden Kraftübertragungselemente eine zweite Deformationsachse 19, wobei die beiden Deformationsachsen 19, 19' zueinander rechtwinklig ausgerichtet sind. Gemäß der Darstellung in Fig. 15b, die einen Längsschnitt in der Schnittebene A-B aus Fig. 15a zeigt, sind die Kraftübertragungselemente 17, 17' als Schieber ausgebildet und führen vertikal ausgerichtete Stellbewegungen aus. Die Kraftübertragungselemente 17, 17' der einzelnen Extrusionswerkzeuge 2 eines Mehrfachextrusionskopfes werden in der zuvor beschriebenen Weise gekoppelt.

Die Düsenkörper 7 der Extrusionswerkzeuge 2 bilden vorzugsweise eine als Einheit horizontal verstellbare oder kippbare Düsenkörperbaugruppe 34. Dieser Düsenkörperbaugruppe kann ein weiterer Antrieb 35 zugeordnet werden, der optional ebenfalls programmgesteuerte Bewegungen während der Extrusion der Vorformlinge 10 ausführt. Im Ausführungsbeispiel der Fig. 6 ist ein programmgesteuerter Antrieb 35 zur horizontalen Verstellung der Düsenbaugruppe 34 relativ zu den Dornen 6 der Extrusionswerkzeuge vorgesehen, wobei die Wirkungsrichtung dieses zusätzlichen Antriebes 35 mit der durch die Kraftangriffspunkte der Übertragungselemente 17 vorgegebenen Deformationsachse 19 fluchtet. Die Schieberichtung zur horizontalen Verstellung oder Kippverstellung der Düsenbaugruppe oder die Schwenkrichtung ist allerdings beliebig festlegbar. Sie kann insbesondere auch parallel zu einer deformationsneutralen Achse der Hülsen 14 ausgerichtet sein.

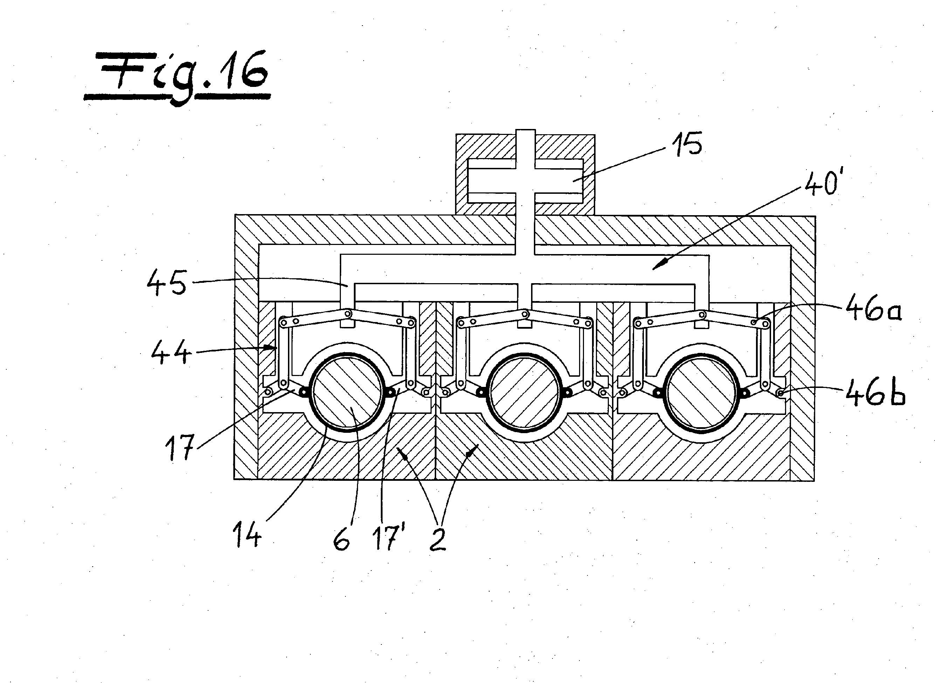

Die Fig. 16 zeigt eine weitere Ausgestaltung eines Mehrfachextrusionskopfes, bei dem die Übertragungselemente 17, 17' paarweise gegenüberliegend an der Hülse 14 angeordnet sind. Die Kraftübertragungselemente 17, 17' sind gelenkig an der Hülse befestigt und über eine Kniehebelanordnung 44 an den Antrieb angeschlossen. Durch die gelenkige Anbindung der Übertragungselemente 17, 17' können sowohl Zug- als auch Druckkräfte zur Deformation der Hülse 14 übertragen werden. Konkret wirkt der Antrieb auf eine Traverse 40', welche für jedes Extrusionswerkzeug 2 einen Zapfen 45 aufweist, an den jeweils eine Kniehebelanordnung 44 für die beidseitige Deformation der Hülse angeschlossen ist. Bei einer in dem Ausführungsbeispiel symmetrischen Anordnung der Kniehebelanordnung 44 für die synchrone Betätigung der beiden Übertragungselemente 17, 17' ergibt sich bezüglich des Stellweges eine zweifache Untersetzung dadurch, dass die Hebel der Kniehebelanordnung an ortsfesten Drehpunkten 46a, 46b abgestützt sind. Gleichzeitig ergibt sich entsprechend unmittelbar an den Übertragungselementen 17, 17' eine Erhöhung der Stellkraft.

Die erfindungsgemäße Vorrichtung ermöglicht eine dynamische Beeinflussung des radialen Düsenspaltverlaufes in parallel nebeneinander angeordneten Extrusionswerkzeugen 2 eines Mehrfachextrusionskopfes 1, die mit einem kleinen Abstand zueinander angeordnet sein können. Die erfindungsgemäße Vorrichtung und das beanspruchte Verfahren lassen sich auch unter beengten Platzverhältnissen eines Mehrfachextrusionskopfes 1 realisieren und sind für kleine Düsendurchmesser insbesondere auch für Durchmesser von deutlich kleiner als 60 mm, geeignet. Dabei können die beschriebenen Verfahren und Vorrichtungen in beliebiger Weise kombiniert werden. Mittels einer Wanddickensteuerung werden die Hülsen 14 der Extrusionswerkzeuge 2 synchron deformiert, wobei auch eine radiale Verschiebung oder ein radiales Verschwenken der Hülsen 14 möglich ist. Die erfindungsgemäße Vorrichtung erfordert nur eine geringe Anzahl von Stellantrieben und ist daher kostengünstig realisierbar. Mittels des erfindungsgemäßen Verfahrens lassen sich symmetrische Verpackungshohlkörper sowie Verpackungshohlkörper, die von einer Zylinderform deutlich abweichen und beispielsweise in der Formtrennnahtebene einen asymmetrischen Konturverlauf aufweist, fertigen.

## Patentansprüche

1. Verfahren zur Herstellung blasgeformter Kunststoffhohlkörper, bei dem schlauchförmige Vorformlinge (10) aus mehreren nebeneinander angeordneten Extrusionswerkzeugen (2) eines Mehrfachextrusionskopfes (1) synchron extrudiert und Blasformkavitäten (4) einer Schließeinheit zugeführt werden, in der die Vorformlinge nach dem Schließen der Blasformkavitäten (4) mittels Blasluft zu Kunststoffhohlkörpern (13) aufgeweitet werden,
wobei die Vorformlinge (10) aus einem von einem Dorn (6) und einem Düsenkörper (7) begrenzten Düsenspalt (s) der Extrusionswerkzeuge (2) austreten und die Düsenspaltbreite der Extrusionswerkzeuge (2) während der Extrusion durch synchrone Stellbewegungen der Dorne (6) und/oder durch eine Stellbewegung des Düsenkörpers verändert wird,
wobei die Schmelzeverteilung der aus dem Mehrfachextrusionskopf (1) austretenden Vorformlinge (10) in Umfangsrichtung jeweils durch die Deformation einer den Düsenspalt (s) begrenzenden elastischen Hülse (14) während der Extrusion verändert wird und **dadurch gekennzeichnet, dass**
zur radialen Verformung der elastisch deformierbaren Hülsen (14) ein programmgesteuerter zentraler Antrieb (15) verwendet wird, der mittels mechanischer Übertragungselemente (17, 17') synchron auf die Hülsen (14) der Extrusionswerkzeuge (2) wirkt.

2. Verfahren nach Anspruch 1, **dadurch gekennzeichnet, dass** die Übertragungselemente (17) bei einer Stellbewegung des Antriebs (15) jeweils an einer Seite auf eine außenliegende Mantelfläche der Hülsen (14) wirken und dass die Hülsen (14) an mindestens einem umfangsseitig angeordneten Gegenlager (18) abgestützt und/oder angebunden werden.

3. Verfahren nach Anspruch 1 oder 2, **dadurch gekennzeichnet, dass** die Übertragungselemente (17, 17') paarweise auf die Hülsen (14) wirken und bei einer Stellbewegung des Antriebs (15) beidseits radiale Druckkräfte auf die zugeordnete Hülse (14) ausüben.

4. Verfahren nach Anspruch 1, **dadurch gekennzeichnet, dass** die Übertragungselemente (17, 17') radiale Zugkräfte auf die Mantelfläche der Hülsen übertragen.

5. Verfahren nach einem der Ansprüche 1 bis 4, **dadurch gekennzeichnet, dass** eine erste Gruppe (I) der Übertragungselemente (17) mittels eines ersten Antriebes (15) betätigt wird, wobei die Übertragungselemente (17) der ersten Gruppe (I) bei einer Stellbewegung des Antriebes (15) gleichgerichtete Zug- oder Druckkräfte auf eine Mantelfläche der Hülsen (14) ausüben, dass eine zweite Gruppe (II) der Übertragungselemente (17) mittels eines zweiten Antriebs (15') betätigt wird, wobei die Übertragungselemente (17) der zweiten Gruppe (II) an einem um 180° zum Kraftangriffspunkt der ersten Gruppe (I) versetzten Umfangsabschnitt der Hülsen (14) ebenfalls gleichgerichtete Druck- oder Zugkräfte auf die Mantelfläche der Hülsen (14) ausüben, und dass durch programmgesteuerte Stellbewegungen der beiden Gruppen (I, II) von Übertragungselementen (17) die Hülsen deformiert, verschwenkt oder radial verschoben werden.

6. Verfahren nach Anspruch 5, **dadurch gekennzeichnet, dass** die Hülsen (14) durch gegenläufige, im Betrag gleichgroße Verstellwege der Übertragungselemente (17) deformiert werden oder durch gegenläufige, im Betrag unterschiedliche Verstellwege deformiert sowie in Richtung der Deformationsachse (19) verschwenkt oder radial verschoben werden oder dass die Hülsen (14) durch gleichgerichtete Verstellbewegungen der Übertragungselemente (17) ohne Deformation radial verschwenkt oder verschoben werden.

7. Verfahren nach einem der Ansprüche 1 bis 6, **dadurch gekennzeichnet, dass** die Kraftangriffspunkte der Übertragungselemente (17, 17') an den Hülsen (14) so festgelegt werden, dass ihre Kraftwirkungsrichtung mit einer Formtrennebene der Blasformkavitäten (4) fluchtet oder senkrecht zu der Formtrennebene ausgerichtet ist.

8. Verfahren nach einem der Ansprüche 1 bis 7, **dadurch gekennzeichnet, dass** die Düsenkörper (7) der Extrusionswerkzeuge (2) eine als Einheit verstellbare Düsenkörperbaugruppe (34) bilden, die mittels eines programmgesteuerten Antriebes (35) während der Extrusion der Vorformlinge (10) horizontal verstellt oder gekippt wird.

9. Verfahren nach einem der Ansprüche 1 bis 7, **dadurch gekennzeichnet, dass** die Düsenkörper (7) der Extrusionswerkzeuge (2) eine als Einheit verstellbare Düsenbaugruppe (34) bilden, die unter Verwendung von programmgesteuerten Antrieben während der Extrusion der Vorformlinge in zwei Achsen horizontal verstellt oder verschwenkt wird.

10. Verfahren nach einem der Ansprüche 1 bis 9, **dadurch gekennzeichnet, dass** an den Extrusionswerkzeugen (2) unabhängige Grundeinstellungen vorgenommen werden, wobei im Zuge dieser Einstellungen die Hülsen (14) vordeformiert werden und/oder die Position der Hülsen (14) korrigiert wird und/oder der Düsenkörper (7) und der Dorn (6) relativ zueinander verstellt werden.

11. Mehrfachextrusionskopf zur Durchführung des Verfahrens nach einem der Ansprüche 1 bis 10, mit mehreren nebeneinanden angeordnete Extrusionswerkzeugen (2) zur Erzeugung schlauchförmiger Vorformlinge (10), und mit einem Stellantrieb (5) zur synchronen Veränderung eines Düsenspaltes (s) der Extrusionswerkzeuge (2), wobei die Extrusionswerkzeuge (2) jeweils mit mindestens einer elastisch deformierbaren Hülse (14) ausgestattet sind, die einen Wandabschnitt des Düsenspaltes (s) bildet und an einem Dorn (6) oder in einem den Dorn umgebenden Düsenkörper (7) angeordnet ist, und **dadurch gekennzeichnet, dass** ein programmgesteuerter zentraler Antrieb (15) zur radialen elastischen Verformung der Hülsen (14) vorgesehen ist, der mittels mechanischer Übertragungselemente (17, 17') synchron auf die Hülsen (14) der Extrusionswerkzeuge (2) wirkt.

12. Mehrfachextrusionskopf nach Anspruch 10, **dadurch gekennzeichnet, dass** die Übertragungselemente (17, 17') auf eine außenliegende oder innenliegende Mantelfläche der Hülsen (14) wirken.

13. Mehrfachextrusionskopf nach Anspruch 11 oder 12, **dadurch gekennzeichnet, dass** die Übertragungselemente (17, 17') bei einer Stellbewegung jeweils an einer Seite auf eine außenliegende Mantelfläche der Hülsen (14) wirken und dass die Hülsen (14) an mindestens einem umfangsseitig angeordneten Gegenlager (18) abgestützt und/oder angebunden sind.

14. Mehrfachextrusionskopf nach Anspruch 11 oder 12, **dadurch gekennzeichnet, dass** die Übertragungselemente (17, 17') paarweise auf die Hülsen (14) wirken und bei einer Stellbewegung beidseits Druck oder Zug auf die zugeordnete Hülse (14) ausüben.

15. Mehrfachextrusionskopf nach Anspruch 14, **dadurch gekennzeichnet, dass** die beiden Übertragungselemente (17, 17') eines jeden Paares kinematisch gekoppelt sind und bei einer Stellbewegung des Antriebes (15) eine gegenläufige Zangenbewegung ausführen.

16. Mehrfachextrusionskopf nach Anspruch 15, **dadurch gekennzeichnet, dass** der Antrieb (15) einen pneumatischen, hydraulischen oder elektromechanischen Antriebskopf (20) zur Erzeugung einer Linearbewegung eines Schubelementes (21) aufweist, dass das Schubelement (21) mit einem linear beweglichen Stellelement (22) zusammenwirkt, welches eine von der Linearbewegung des Schubelementes abgeleitete reversierende Stellbewegung ausführt, dass die an einer Seite auf die Hülsen (14) wirkenden Übertragungselemente (17) an dem Schubelement (21) angeordnet sind und dass die paarweise zugeordneten Übertragungselemente (17'), die in Kraftwirkungsrichtung auf eine gegenüberliegende Seite der Hülsen (14) wirken, an das Stellelement (22) angeschlossen sind.

17. Mehrfachextrusionskopf nach Anspruch 15, **dadurch gekennzeichnet, dass** der Antrieb (20) als Spindelantrieb ausgebildet ist und eine drehbar gelagerte Abtriebsspindel (23) mit rechtsgängigen und linksgängigen Gewindeabschnitten (24, 24') aufweist, wobei jeweils ein Übertragungselement (17) der den Hülsen (14) zugeordneten Übertragungselement-Paare an einen rechtsgängigen Gewindeabschnitt (24) und das andere Übertragungselement (17') des Paares an den linksgängigen Gewindeabschnitt (24') angeschlossen ist.

18. Mehrfachextrusionskopf nach Anspruch 15, **dadurch gekennzeichnet, dass** der Antrieb (20) als Spindelantrieb ausgebildet ist, der zwei kinematisch gekoppelte gegensinnig rotierende Abtriebsspindeln (25, 25') aufweist, und dass jeweils ein Übertragungselement (17) der paarweise den Hülsen (14) zugeordneten Übertragungselemente an eine erste Abtriebsspindel (25) und das andere Übertragungselement (17') des Paares an die zweite Abtriebsspindel (25') angeschlossen ist.

19. Mehrfachextrusionskopf nach einem der Ansprüche 11 bis 14, **dadurch gekennzeichnet, dass** die Übertragungselemente (17) als Schieber (27) ausgebildet sind, wobei die Schieber (27) jeweils eine Steuerfläche aufweisen, die mit einer Gegenfläche an der zugeordneten Hülse (14) zusammenwirkt.

20. Mehrfachextrusionskopf nach Anspruch 19, **dadurch gekennzeichnet, dass** die Übertragungselemente (17) auf Steuerflächen (29') wirken, die mit den Hülsen (14) verbunden sind und bei einer Stellbewegung der Übertragungselemente (17) Zugkräfte auf die Hülsen (14) übertragen.

21. Mehrfachextrusionskopf nach Anspruch 19 oder 20, **dadurch gekennzeichnet, dass** die Übertragungselemente (17) auf Steuerflächen (29, 29') wirken, die mit den Hülsen (14) verbunden sind und bei einer Stellbewegung der Übertragungselemente (17) in Abhängigkeit des Stellweges eine Zugkraft oder eine Druckkraft auf die Hülsen übertragen.

22. Mehrfachextrusionskopf nach einem der Ansprüche 19 bis 20, **dadurch gekennzeichnet, dass** die Übertragungselemente (17) in Anschlusselemente (28) eingreifen, die mit den Hülsen (14) verbunden sind und mit den Übertragungselementen zusammenwirkende Steuerflächen (29, 29') zur Übertragung radialer Druck- oder Zugkräfte aufweisen.

23. Mehrfachextrusionskopf nach einem der Ansprüche 11 bis 14, **dadurch gekennzeichnet, dass** die Übertragungselemente (17) als Drehringe (30) ausgebildet sind, die an einer zu den Hülsen (14) benachbarten Umfangsfläche mindestens einen Nocken (31) aufweisen, und dass die Nocken (31) bei einer Drehbewegung der Drehringe (30) mit einer Steuerkontur (32) an den Hülsen (14) zusammenwirken und Druck auf die zugeordnete Hülse (14) ausüben.

24. Mehrfachextrusionskopf nach einem der Ansprüche 11 bis 14, **dadurch gekennzeichnet, dass** die Übertragungselemente (17) drehbar gelagerte Exzenter (33) oder Gelenke aufweisen, die bei einer Drehbewegung auf eine zugeordnete Steuerkontur an den Hülsen (14) wirken und Druck auf die zugeordnete Hülse (14) ausüben.

25. Mehrfachextrusionskopf nach einem der Ansprüche 19 bis 24, **dadurch gekennzeichnet, dass** eine erste Gruppe (I) der Übertragungselemente (17) einem ersten Antrieb (15) zugeordnet ist, dass eine zweite Gruppe (II) der Übertragungselemente (17) einem zweiten Antrieb (15') zugeordnet ist, wobei die erste Gruppe (I) der Übertragungselemente an einer ersten Seite der Hülsen (14) gleichgerichtete Druck- oder Zugkräfte auf die Hülsen (14) ausübt, wobei die zweite Gruppe (II) der Übertragungselemente an einem um 180° zum Kraftangriffspunkt der ersten Gruppe (I) versetzten Umfangsabschnitt der Hülsen (14) ebenfalls gleichgerichtete Druck- oder Zugkräfte auf die Hülsen ausübt, und dass die beiden Antriebe (15, 15') an eine Programmsteuerung zur Steuerung ihrer Stellbewegung angeschlossen sind.

26. Mehrfachextrusionskopf nach Anspruch 25, **dadurch gekennzeichnet, dass** die Übertragungselemente (17) in Abhängigkeit ihrer Stellbewegungen radial wirkende Druckkräfte oder Zugkräfte auf die Hülsen (14) übertragen und dass mittels programmgesteuerter Stellbewegungen der beiden Gruppen (I, II) von Übertragungselementen (17) die Hülsen (14) in einer durch die Kraftangriffspunkte vorgegebenen Deformationsachse (19) deformierbar und/oder verschiebbar bzw. verschwenkbar sind.

27. Mehrfachextrusionskopf nach einem der Ansprüche 11 bis 26, **dadurch gekennzeichnet, dass** die Düsenkörper (7) eine als Einheit horizontal verstellbare oder kippbewegliche Düsenkörperbaugruppe (34) bilden und dass ein programmgesteuerter Antrieb (35) zur Horizontalverstellung und/oder Kippverstellung der Düsenbaugruppe (34) relativ zu den Dornen (6) der Extrusionswerkzeuge (2) vorgesehen ist.

28. Mehrfachextrusionskopf nach Anspruch 27, **dadurch gekennzeichnet, dass** die Wirkungsrichtung des Antriebs (35) zur Horizontalverstellung der Düsenbaugruppe (34) oder Kippverstellung der Düsenbaugruppe mit der durch die Kraftangriffspunkte der Übertragungselemente vorgegebenen Deformationsachse (19) fluchtet oder sich in einer deformationsneutralen Achse der Hülsen erstreckt.

29. Mehrfachextrusionskopf nach einem der Ansprüche 11 bis 28, **dadurch gekennzeichnet, dass** die Extrusionswerkzeuge (2) individuell zugeordnete und voneinander unabhängige betätigbare Stellelemente (36 bis 39) zur Veränderung einer Grundeinstellung der Düsenspaltgeometrie aufweisen.

30. Mehrfachextrusionskopf nach Anspruch 29, **dadurch gekennzeichnet, dass** an den Übertragungselementen (17, 17') Stellelemente (36, 37) angeordnet sind, wobei durch Betätigung dieser Stellelemente (36, 37) die Grundeinstellung des Extrusionswerkzeuges (2) durch eine Vordeformation und/oder einer Positionskorrektur der Hülse (14) veränderbar ist.

31. Mehrfachextrusionskopf nach einem der Ansprüche 11 bis 14, **dadurch gekennzeichnet, dass** die Übertragungselemente (17, 17') über ein mechanisches Getriebe, welches eine Weguntersetzung bewirkt, an den Antrieb (15) angeschlossen sind, wobei die Untersetzung vorzugsweise zumindest zweistufig erfolgt.

32. Mehrfachextrusionskopf nach Anspruch 31, **dadurch gekennzeichnet, dass** die Übertragungselemente (17, 17') über eine Kniehebelanordnung an den Antrieb (15) angeschlossen sind.

## Claims

1. A method for producing blow-moulded hollow plastic bodies, in which tubular preforms (10) are synchronously extruded from several adjacently arranged extrusion dies (2) of a multiple extrusion head (1) and fed to blow-moulding cavities (4) of a clamping unit, in which the preforms are expanded into hollow plastic bodies (13) by means of blowing air after the blow-moulding cavities (4) have been closed,
wherein the preforms (10) emerge from a nozzle gap (s) of the extrusion dies (2), which is defined by a mandrel (6) and a nozzle body (7), and the nozzle gap width of the extrusion dies (2) is varied during the extrusion by means of synchronous adjusting motions of the mandrels (6) and/or by means of an adjusting motion of the nozzle body, and
wherein the melt distribution of the preforms (10) emerging from the multiple extrusion head (1) is respectively varied in the circumferential direction during the extrusion by means of a deformation of an elastic sleeve (14) defining the nozzle gap (s), **characterized in that**
a program-controlled central drive (15) is used for realizing the radial deformation of the elastically deformable sleeves (14) and synchronously acts upon the sleeves (14) of the extrusion dies (2) by means of mechanical transmission elements (17, 17').

2. The method according to claim 1, **characterized in that** the transmission elements (17) respectively act upon an outer surface area of the sleeves (14) on one side during an adjusting motion of the drive (15), and **in that** the sleeves (14) are supported on and/or connected to at least one circumferentially arranged outer support (18).

3. The method according to claim 1 or 2, **characterized in that** the transmission elements (17, 17') act upon the sleeves (14) in pairs and exert radial compressive forces upon the assigned sleeve (14) on both sides during an adjusting motion of the drive (15).

4. The method according to claim 1, **characterized in that** the transmission elements (17, 17') exert radial tensile forces upon the surface area of the sleeves.

5. The method according to one of claims 1-4, **characterized in that** a first group (I) of the transmission elements (17) is actuated by means of a first drive (15), wherein the transmission elements (17) of the first group (I) exert identically directed tensile or compressive forces upon a surface area of the sleeves (14) during an adjusting motion of the drive (15), **in that** a second group (II) of the transmission elements (17) is actuated by means of a second drive (15'), wherein the transmission elements (17) of the second group (II) likewise exert identically directed compressive or tensile forces upon the surface area of the sleeves (14) in a circumferential section of the sleeves (14) that is offset relative to the force application point of the first group (I) by 180°, and **in that** the sleeves are deformed, pivoted or radially displaced by means of program-controlled adjusting motions of the two groups (I, II) of transmission elements (17).

6. The method according to claim 5, **characterized in that** the sleeves (14) are deformed by means of oppositely directed adjustment strokes of the transmission elements (17) over identical distances or deformed by means of oppositely directed adjustment strokes over different distances, as well as pivoted or radially displaced in the direction of the deformation axis (19), or that the sleeves (14) are radially pivoted or displaced without deformation by means of identically directed adjusting motions of the transmission elements (17).

7. The method according to one of claims 1-6, **characterized in that** the force application points of the transmission elements (17, 17') on the sleeves (14) are defined in such a way that the direction of force application is aligned with a mould parting plane of the blow-moulding cavities (4) or oriented perpendicular to the mould parting plane.

8. The method according to one of claims 1-7, **characterized in that** the nozzle bodies (7) of the extrusion dies (2) form a collectively adjustable nozzle body assembly (34) that is horizontally adjusted or tilted during the extrusion of the preforms (10) by means of a program-controlled drive (35).

9. The method according to one of claims 1-7, **characterized in that** the nozzle bodies (7) of the extrusion dies (2) form a collectively adjustable nozzle assembly (34) that is horizontally adjusted in two axes or pivoted during the extrusion of the preforms by means of program-controlled drives.

10. The method according to one of claims 1-9, **characterized in that** independent basic adjustments are carried out on the extrusion dies (2), wherein the sleeves (14) are pre-deformed and/or the position of the sleeves (14) is corrected and/or the nozzle body (7) and the mandrel (6) are adjusted relative to one another during the course of these adjustments.

11. A multiple extrusion head for carrying out the method according to one of claims 1-10, with several adjacently arranged extrusion dies (2) for producing tubular preforms (10), and with an adjusting drive (5) for synchronously varying a nozzle gap (s) of the extrusion dies (2), wherein the extrusion dies (2) are respectively equipped with at least one elastically deformable sleeve (14) that forms a wall section of the nozzle gap (s) and is arranged on a mandrel (6) or in a nozzle body (7) surrounding the mandrel, **characterized in that** a program-controlled central drive (15) is provided for the radial elastic deformation of the sleeves (14) and synchronously acts upon the sleeves (14) of the extrusion dies (2) by means of mechanical transmission elements (17, 17').

12. The multiple extrusion head according to claim 10, **characterized in that** the transmission elements (17, 17') act upon an outer or inner surface area of the sleeves (14).

13. The multiple extrusion head according to claim 11 or 12, **characterized in that** the transmission elements (17, 17') respectively act upon an outer surface area of the sleeves (14) on one side during an adjusting motion, and **in that** the sleeves (14) are supported on and/or connected to at least one circumferentially arranged outer support (18).

14. The multiple extrusion head according to claim 11 or 12, **characterized in that** the transmission elements (17, 17') act upon the sleeves (14) in pairs and exert pressure or tension upon the assigned sleeve (14) on both sides during an adjusting motion.

15. The multiple extrusion head according to claim 14, **characterized in that** the two transmission elements (17, 17') of each pair are kinematically coupled and carry out oppositely directed tongs motions during an adjusting motion of the drive (15).

16. The multiple extrusion head according to claim 15, **characterized in that** the drive (15) features a pneumatic, hydraulic or electromechanic driving head (20) for generating a linear motion of a thrust element (21), **in that** the thrust element (21) cooperates with a linearly movable adjusting element (22) that carries out a reversing adjusting motion derived from the linear motion of the thrust element, **in that** the transmission elements (17), which act upon the sleeves (14) on one side, are arranged on the thrust element (21), and **in that** the other transmission elements (17') assigned to a pair, which act upon the sleeves (14) on an opposite side referred to the direction of force application, are connected to the adjusting element (22).

17. The multiple extrusion head according to claim 15, **characterized in that** the drive (20) is realized in the form of a spindle drive and features a rotatably supported driving spindle (23) with right-hand and left-hand thread sections (24, 24'), wherein one transmission element (17) of the transmission element pairs assigned to the sleeves (14) is respectively connected to a right-hand thread section (24) and the other transmission element (17') of the pair is connected to a left-hand thread section (24').

18. The multiple extrusion head according to claim 15, **characterized in that** the drive (20) is realized in the form of a spindle drive featuring two kinematically coupled driving spindle (25, 25') that rotate in opposite directions, and **in that** one transmission element (17) of the transmission element pairs assigned to the sleeves (14) is respectively connected to a first driving spindle (25) and the other transmission element (17') of the pair is connected to the second driving spindle (25').

19. The multiple extrusion head according to one of claims 11-14, **characterized in that** the transmission elements (17) are realized in the form of slides (27), wherein the slides (27) respectively feature a control surface that cooperates with an opposite surface of the assigned sleeve (14).

20. The multiple extrusion head according to claim 19, **characterized in that** the transmission elements (17) act upon control surfaces (29') that are connected to the sleeves (14) and exert tensile forces upon the sleeves (14) during an adjusting motion of the transmission elements (17).

21. The multiple extrusion head according to claim 19 or 20, **characterized in that** the transmission elements (17) act upon control surfaces (29, 29') that are connected to the sleeves (14) and exert a tensile force or a compressive force upon the sleeves in dependence on the adjustment stroke during an adjusting motion of the transmission elements (17).

22. The multiple extrusion head according to one of claims 19-20, **characterized in that** the transmission elements (17) engage into connecting elements (28) that are connected to the sleeves (14) and feature control surfaces (29, 29') that cooperate with the transmission elements and serve for transmitting radial compressive or tensile forces.

23. The multiple extrusion head according to one of claims 11-14, **characterized in that** the transmission elements are realized in the form of swivels (30) that feature at least one cam (31) on a circumferential surface adjacent to the sleeves (14), and **in that** the cams (31) cooperate with a control contour (32) on the sleeves (14) during a rotational motion of the swivels (30) and thereby exert pressure upon the assigned sleeve (14).

24. The multiple extrusion head according to one of claims 11-14, **characterized in that** the transmission elements (17) feature rotatably supported cams (13) or joints that act upon an assigned control contour on the sleeves (14) during a rotational motion and thereby exert pressure upon the assigned sleeve (14).

25. The multiple extrusion head according to one of claims 19-24, **characterized in that** a first group (I) of the transmission elements (17) is assigned to a first drive (15), **in that** a second group (II) of the transmission elements (17) is assigned to a second drive (15'), wherein the first group (I) of transmission elements exerts identically directed compressive or tensile forces upon the sleeves (14) on a first side of the sleeves (14), wherein the second group (II) of transmission elements likewise exerts identically directed compressive or tensile forces upon the sleeves on a circumferential section of the sleeves (14) that is offset relative to the force application point of the first group (I) by 180°, and **in that** the two drives (15, 15') are connected to a program control for controlling the adjusting motion.

26. The multiple extrusion head according to claim 25, **characterized in that** the transmission elements (17) exert radially acting compressive forces or tensile forces upon the sleeves (14) in dependence on their adjusting motions, and **in that** the sleeves (14) can be deformed and/or displaced or pivoted in a deformation axis (19) defined by the force application points by means of program-controlled adjusting motions of the two groups (I, II) of transmission elements (17).

27. The multiple extrusion head according to one of claims 11-26, **characterized in that** the nozzle bodies (7) form a nozzle body assembly (34) that can be collectively adjusted or tilted horizontally, and **in that** a program-controlled drive (35) is provided for realizing the horizontal adjusting and/or tilting motion of the nozzle assembly (34) relative to the mandrels (6) of the extrusion dies (2).

28. The multiple extrusion head according to claim 27, **characterized in that** the direction of action of the drive (35) for the horizontal adjustment of the nozzle assembly (34) or the tilting motion of the nozzle assembly is aligned with the deformation axis (19) defined by the force application points of the transmission elements or extends in a deformation-neutral axis of the sleeves.

29. The multiple extrusion head according to one of claims 11-28, **characterized in that** the extrusion dies (2) feature individually assigned and independently actuatable adjusting elements (36-39) for varying a basic adjustment of the nozzle geometry.

30. The multiple extrusion head according to claim 29, **characterized in that** adjusting elements (36, 37) are arranged on the transmission elements (17, 17'), wherein the basic adjustment of the extrusion die (2) can be varied in the form of a pre-deformation and/or a position correction of the sleeve (14) by actuating these adjusting elements (36, 37).

31. The multiple extrusion head according to one of claims 11-14, **characterized in that** the transmission elements (17, 17') are connected to the drive (15) by means of a mechanical gear that causes a stroke reduction, wherein the reduction preferably takes place in at least two stages.

32. The multiple extrusion head according to claim 31, **characterized in that** the transmission elements (17, 17') are connected to the drive (15) by means of a toggle lever arrangement.

## Revendications

1. Procédé destiné à la fabrication de corps creux en plastique moulés par soufflage, dans lequel des préformes tubulaires (10) sont extrudées de façon synchrone à partir de plusieurs outils d'extrusion (2) d'une tête d'extrusion multiple (1) disposés les uns à côté des autres, puis amenées à des cavités de moulage par soufflage (4) d'une unité à fermeture, dans laquelle les préformes sont expansées en corps creux en plastique (13) avec de l'air de soufflage après la fermeture des cavités de moulage par soufflage (4),
sachant que les préformes (10) sortent en s'élargissant d'une fente de buse (s) des outils d'extrusion (2) délimitée par un mandrin (6) et un corps de buse (7), et la largeur de fente de buse des outils d'extrusion (2) est modifiée pendant l'extrusion par des mouvements de réglage synchrone des mandrins (6) et/ou par un mouvement de réglage du corps de buse,
dans lequel la répartition de la masse fondue des préformes (10) sortant de la tête d'extrusion multiple (1) est modifiée dans le sens périphérique pendant l'extrusion, respectivement par la déformation d'un manchon élastique (14) délimitant la fente de buse (s), **caractérisé en ce**
**qu'**un entraînement central commandé par logiciel (15) est employé pour déformer radialement les manchons déformables de façon élastique (14), lequel agit de façon synchrone sur les manchons (14) des outils d'extrusion (2) au moyen d'éléments de transmission mécaniques (17, 17').

2. Procédé selon la revendication 1, **caractérisé en ce que** les éléments de transmission (17) agissent respectivement sur un côté sur une surface latérale extérieure des manchons (14) lors d'un mouvement de réglage de l'entraînement (15) et que les manchons (14) sont appuyés et/ou attachés sur au moins un contre-palier (18) disposé sur le pourtour.

3. Procédé selon la revendication 1 ou 2, **caractérisé en ce que** les éléments de transmission (17, 17') agissent par paire sur les manchons (14) et exercent de chaque côté des forces de pression radiales sur le manchon correspondant (14) lors d'un mouvement de réglage de l'entraînement (15).

4. Procédé selon la revendication 1, **caractérisé en ce que** les éléments de transmission (17, 17') transmettent des forces de traction radiales sur la surface latérale des manchons.

5. Procédé selon l'une des revendications 1 à 4, **caractérisé en ce qu'**un premier groupe (I) des éléments de transmission (17) est actionné au moyen d'un premier entraînement (15), sachant que les éléments de transmission (17) du premier groupe (I) exercent des forces de traction ou de pression dirigées dans le même sens sur une surface latérale des manchons (14) lors d'un mouvement de réglage de l'entraînement (15), qu'un second groupe (II) des éléments de transmission (17) est actionné au moyen d'un second entraînement (15'), sachant que les éléments de transmission (17) du second groupe (II) exercent sur un tronçon périphérique des manchons (14) décalé de 180° par rapport au point d'application de force du premier groupe (I), des forces de traction ou de pression également dirigées dans le même sens sur la surface latérale des manchons (14), et que par des mouvements de réglage commandés par logiciel des deux groupes (I, II) d'éléments de transmission (17), les manchons sont déformés, basculés ou poussés radialement.

6. Procédé selon la revendication 5, **caractérisé en ce que** les manchons (14) sont déformés par des trajets de déplacement des éléments de transmission (17) opposés et de même amplitude ou par des trajets de déplacement opposés d'amplitude inégale ainsi que basculés ou poussés radialement en direction de l'axe de déformation (19) ou que les manchons (14) sont basculés ou poussés radialement sans déformation par des mouvements de réglage des éléments de transmission (17) dirigés dans le même sens.

7. Procédé selon l'une des revendications 1 à 6, **caractérisé en ce que** les points d'application de force des éléments de transmission (17, 17') sur les manchons (14) sont ainsi définis que leurs sens effectif de force affleure avec un plan de séparation de moule des cavités de moulage par soufflage (4) ou est aligné verticalement au plan de séparation de moule.

8. Procédé selon l'une des revendications 1 à 7, **caractérisé en ce que** les corps de buse (7) des outils d'extrusion (2) forment un module de corps de buse (34) pouvant être déplacé en tant qu'unité, lequel est déplacé ou basculé horizontalement pendant l'extrusion des préformes (10), au moyen d'un entraînement (35) commandé par logiciel.

9. Procédé selon l'une des revendications 1 à 7, **caractérisé en ce que** les corps de buse (7) des outils d'extrusion (2) forment un module de corps de buse (34) pouvant être déplacé en tant qu'unité, lequel est déplacé ou basculé horizontalement sur deux axes pendant l'extrusion des préformes en employant des entraînements programmés par logiciel.

10. Procédé selon l'une des revendications 1 à 9, **caractérisé en ce que** des réglages de base indépendants sont effectués sur les outils d'extrusion (2), sachant qu'à la suite de ces réglages, les manchons (14) sont prédéformés et/ou la position des manchons (14) est corrigée et/ou le corps de buse (7) et le mandrin (6) sont déplacés l'un par rapport à l'autre.

11. Tête d'extrusion multiple pour exécuter le procédé selon l'une des revendications 1 à 10, comprenant plusieurs outils d'extrusion (2) disposés les uns à côté des autres pour fabriquer des préformes (10) tubulaires et comprenant un entraînement de commande (5) pour la modification synchrone d'une fente de buse (s) des outils d'extrusion (2), sachant que les outils d'extrusion (2) sont dotés respectivement d'au moins un manchon (14) déformable de façon élastique, qui forme un tronçon de paroi de la fente de buse (s) et est disposé sur un mandrin (6) ou dans un corps de buse (7) entourant le mandrin, et **caractérisée en ce qu'**un entraînement central (15) commandé par logiciel est prévu pour la déformation élastique radiale des manchons (14), lequel agit de façon synchrone sur les manchons (14) des outils d'extrusion (2) au moyen d'éléments de transmission mécanique (17, 17').

12. Tête d'extrusion multiple selon la revendication 10, **caractérisée en ce que** les éléments de transmission mécanique (17, 17') agissent sur une surface latérale extérieure ou intérieure des manchons (14).

13. Tête d'extrusion multiple selon la revendication 11 ou 12, **caractérisée en ce que** les éléments de transmission mécanique (17, 17') agissent, lors d'un mouvement de réglage, respectivement sur un côté sur une surface latérale extérieure des manchons (14) et que les manchons (14) sont appuyés et/ou attachés sur au moins un contre-palier (18) disposé sur le pourtour.

14. Tête d'extrusion multiple selon la revendication 11 ou 12, **caractérisée en ce que** les éléments de transmission mécanique (17, 17') agissent par paire sur les manchons (14) et exercent de chaque côté une pression ou une traction sur le manchon correspondant (14) lors d'un mouvement de réglage.

15. Tête d'extrusion multiple selon la revendication 14, **caractérisée en ce que** les deux éléments de transmission mécanique (17, 17') de telle ou telle paire sont couplés de façon cinématique et effectuent un mouvement de pince contraire lors d'un mouvement de réglage de l'entraînement (15).

16. Tête d'extrusion multiple selon la revendication 15, **caractérisée en ce que** l'entraînement (15) présente une tête d'entraînement (20) pneumatique, hydraulique ou électromécanique pour produire un mouvement linéaire d'un élément de poussée (21), que l'élément de poussée (21) coopère avec un élément de réglage (22) mobile de façon linéaire, qui exécute un mouvement de réglage inverseur détourné du mouvement linéaire de l'élément de poussée, que les éléments de transmission (17) agissant sur un côté sur les manchons (14) sont disposés sur l'élément de poussée (21) et que les éléments de transmission (17') attribués par paire qui agissent dans le sens effectif de force sur un côté opposé des manchons (14), sont raccordés à l'élément de réglage (22).

17. Tête d'extrusion multiple selon la revendication 15, **caractérisée en ce que** l'entraînement (20) est conçu en tant qu'entraînement à broche, qui présente une broche de sortie (23) rotative comprenant des tronçons filetés (24, 24') droit et gauche, sachant que respectivement un élément de transmission (17) des paires d'éléments de transmission attribuées aux manchons (14) est raccordé à un tronçon fileté (24) droit et l'autre élément de transmission (17') de la paire est raccordé au tronçon fileté (24') gauche.

18. Tête d'extrusion multiple selon la revendication 15, **caractérisée en ce que** l'entraînement (20) est conçu en tant qu'entraînement à broche, qui présente deux broches de sortie (25, 25') couplées de façon cinématique, tournant en sens contraire, et que respectivement un élément de transmission (17) des éléments de transmission attribués par paire aux manchons (14) est raccordé à une première broche secondaire (25) et l'autre élément de transmission (17') de la paire est raccordé à la seconde broche secondaire (25').

19. Tête d'extrusion multiple selon l'une des revendications 11 à 14, **caractérisée en ce que** les éléments de transmission (17) sont conçus en tant que registres (27), sachant que les registres (27) présentent respectivement une surface de commande qui coopère avec une contre-surface sur le manchon (14) correspondant.

20. Tête d'extrusion multiple selon la revendication 19, **caractérisée en ce que** les éléments de transmission (17) agissent sur des surfaces de commande (29') qui sont reliées aux manchons (14) et transmettent des forces de traction aux manchons (14) lors d'un mouvement de réglage des éléments de transmission (17).

21. Tête d'extrusion multiple selon la revendication 19 ou 20, **caractérisée en ce que** les éléments de transmission (17) agissent sur des surfaces de commande (29, 29') qui sont reliées aux manchons (14) et transmettent une force de traction ou une force de pression aux manchons en fonction du trajet de déplacement, lors d'un mouvement de réglage des éléments de transmission (17).

22. Tête d'extrusion multiple selon l'une des revendications 19 à 20, **caractérisée en ce que** les éléments de transmission (17) se mettent en prise dans des éléments de raccord (28) qui sont reliés aux manchons (14) et présentent des surfaces de commande (29, 29') coopérant avec les éléments de transmission pour transmettre des forces de pression ou de traction radiales.

23. Tête d'extrusion multiple selon l'une des revendications 11 à 14, **caractérisée en ce que** les éléments de transmission (17) sont conçus en tant que bagues rotatives (30) qui présentent au moins une came (31) sur une surface périphérique voisine des manchons (14), et que les cames (31) coopèrent avec un contour de commande (32) sur les manchons (14) lors d'une rotation des bagues rotatives (30) et exercent une pression sur le manchon (14) correspondant.

24. Tête d'extrusion multiple selon l'une des revendications 11 à 14, **caractérisée en ce que** les éléments de transmission (17) présentent des articulations ou des excentriques (33) disposés rotatifs, qui agissent sur un contour de commande correspondant sur les manchons (14) lors d'une rotation et exercent une pression sur le manchon (14) correspondant.

25. Tête d'extrusion multiple selon l'une des revendications 19 à 24, **caractérisé en ce qu'**un premier groupe (I) des éléments de transmission (17) est attribué à un premier entraînement (15), qu'un second groupe (II) des éléments de transmission (17) est attribué à un second entraînement (15'), sachant que le premier groupe (I) des éléments de transmission exerce des forces de traction ou de pression dirigées dans le même sens sur les manchons (14) sur une première face des manchons (14), sachant que le second groupe (II) des éléments de transmission exerce sur un tronçon périphérique des manchons (14) décalé de 180° par rapport au point d'application de force du premier groupe (I), des forces de traction ou de pression également dirigées dans le même sens sur les manchons et que les deux entraînements (15, 15') sont reliés à une commande logicielle pour commander leurs mouvements de réglage.

26. Tête d'extrusion multiple selon la revendication 25, **caractérisée en ce que** les éléments de transmission (17) transmettent en fonction de leurs mouvements de réglage, des forces de traction ou de pression agissant radialement sur les manchons (14) et que les manchons (14), au moyen de mouvements de réglage commandés par logiciel des deux groupes (I, II) d'éléments de transmission (17), peuvent être déformés et/ou poussés, respectivement, basculés sur un axe de déformation (19) prédéfini par les points d'application de force.

27. Tête d'extrusion multiple selon l'une des revendications 11 à 26, **caractérisé en ce que** les corps de buse (7) forment un module de corps de buse (34) déplaçable horizontalement ou basculable et qu'un entraînement commandé par logiciel (35) est prévu pour le déplacement horizontal et/ou la bascule du module de corps de buse (34) par rapport aux mandrins (6) des outils d'extrusion (2).

28. Tête d'extrusion multiple selon la revendication 27, **caractérisée en ce que** le sens d'action de l'entraînement (35) par rapport au déplacement horizontal du module de corps de buse (34) ou à la bascule du module de corps de buse affleure avec l'axe de déformation (19) prédéfini par les points d'application de force des éléments de transmission ou s'étend dans un axe à déformation neutre des manchons.

29. Tête d'extrusion multiple selon l'une des revendications 11 à 28, **caractérisé en ce que** les outils d'extrusion (2) présentent des éléments de réglage (36 à 39) actionnables, attribués individuellement et indépendamment l'un de l'autre, pour modifier un réglage de base de la géométrie de fente de buse.

30. Tête d'extrusion multiple selon la revendication 29, **caractérisée en ce que** des éléments de réglage (36, 37) sont disposés sur les éléments de transmission (17, 17'), sachant que le réglage de base des outils d'extrusion (2) peut être modifié par une prédéformation et/ou une correction de position des manchons (14), par l'actionnement de ces éléments de réglage (36, 37).

31. Tête d'extrusion multiple selon l'une des revendications 11 à 14, **caractérisée en ce que** les éléments de transmission (17, 17') sont reliés à l'entraînement (15) par un engrenage mécanique qui effectue une démultiplication de trajet, sachant que la démultiplication s'effectue de préférence en deux niveaux.

32. Tête d'extrusion multiple selon la revendication 31, **caractérisée en ce que** les éléments de transmission (17, 17') sont reliés à l'entraînement (15) par un agencement de genouillère.
